# EUROPEAN PATENT SPECIFICATION

(11) **EP 4 380 240 B1**
(45) Date of publication and mention of the grant of the patent: **14.10.2026**
(21) Application number: 21951264.7
(22) Date of filing: 28.07.2021
(51) Int. Cl.: H04W 52/02, H04L 5/00, H04W 76/27, H04W 76/28

(54) **ENERGY-SAVING CONFIGURATION METHOD AND APPARATUS**
ENERGIESPARENDES KONFIGURATIONSVERFAHREN UND VORRICHTUNG
PROCÉDÉ ET APPAREIL DE CONFIGURATION D'ÉCONOMIE D'ÉNERGIE

(43) Date of publication of application: 05.06.2024
(73) Proprietor: Beijing Xiaomi Mobile Software Co., Ltd., Beijing 100085 (CN)
(72) Inventor: LIU, Yang, Beijing 100085 (CN)
(74) Representative: Gunzelmann, Rainer
(86) International application number: PCT/CN2021/109081
(87) International publication number: WO 2023/004652

(56) References cited:
- WO-A1-2020/140966
- WO-A1-2020/140966
- CN-A- 111 555 839
- CN-A- 113 133 119
- CN-A- 113 170 451
- CATT: "Summary of UE Power Saving Schemes", vol. RAN WG1, no. Athens, Greece; 20190225 - 20190301, 26 February 2019 (2019-02-26), XP051601086, Retrieved from the Internet <URL:http://www.3gpp.org/ftp/tsg%5Fran/WG1%5FRL1/TSGR1%5F96/Docs/R1%2D1903411%2Ezip> [retrieved on 20190226]
- MODERATOR (MEDIATEK): "Summary of Paging Enhancements", 3GPP DRAFT; R1-2106143, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210510 - 20210527, 2 June 2021 (2021-06-02), Mobile Competence Centre ; 650, route des Lucioles ; F-06921 Sophia-Antipolis Cedex ; France , XP052019153

## Description

### FIELD

The present invention relates to the field of communication technology, and particularly to an energy-saving configuration method and device.

### BACKGROUND

In the related art, a transmission cycle of a synchronization signal block (SSB) carried on a carrier frequency band of a defined cell may be 20 ms by default. In a case of only a small number of terminals exist in the defined cell, while the transmission cycle is still maintained at 20 ms, a large amount of the resource of the network device is wasted and the energy consumption is large. Examples of prior art methods and devices are disclose in the PCT application WO 2020/140966 A1 and in the 3GPP Draft R1-1903411 by CATT: "Summary of UE Power Saving Schemes".

### SUMMARY

Accordingly, there is provided an energy saving method performed by a network device as set out in independent claim 1, an energy saving method performed by a terminal device as set out in independent claim 2, a network device as set out in independent claim 14 and a terminal device as set out in independent claim 15. Other advantageous embodiments are defined in the dependent claims.

Additional aspects and advantages of embodiments of disclosure will be given in part in the following descriptions, become apparent in part from the following descriptions, or be learned from the practice of the embodiments of the present invention.

### BRIEF DESCRIPTION OF THE DRAWINGS

In order to clearly illustrate technical solutions of embodiments of the present invention or the background, drawings for the embodiments of the present invention or the background are briefly described below.
FIG. 1 is a flow chart of an energy-saving configuration method provided by an embodiment of the present invention;
FIG. 2 is a flow chart of an energy-saving configuration method provided by another embodiment of the present invention;
FIG. 3 is a flow chart of an energy-saving configuration method provided by a further embodiment of the present invention;
FIG. 4 is a flow chart of an energy-saving configuration method provided by a further embodiment of the present invention;
FIG. 5 is a flow chart of an energy-saving configuration method provided by a further embodiment of the present invention;
FIG. 6 is a flow chart of an energy-saving configuration method provided by a further embodiment of the present invention;
FIG. 7 is a flow chart of an energy-saving configuration method provided by a further embodiment of the present invention;
FIG. 8 is a flow chart of an energy-saving configuration method provided by a further embodiment of the present invention;
FIG. 9 is a flow chart of an energy-saving configuration method provided by a further embodiment of the present invention;
FIG. 10 is a flow chart of an energy-saving configuration method provided by a further embodiment of the present invention;
FIG. 11 is a block diagram of an energy-saving configuration apparatus provided by an embodiment of the present invention;
FIG. 12 is a block diagram of an energy-saving configuration apparatus provided by another embodiment of the present invention;
FIG. 13 is a block diagram of a network device provided by an embodiment of the present invention.
FIG. 14 is a block diagram of a terminal device provided by an embodiment of the present invention.

### DETAILED DESCRIPTION

Embodiments will be described in detail herein, examples of which are illustrated in the accompanying drawings. The following description refers to the accompanying drawings in which the same reference numerals in different drawings represent the same or similar elements unless otherwise represented. The implementations set forth in the following description of the embodiments do not represent all implementations in line with the present invention. Instead, they are merely examples of apparatuses and methods in line with aspects related to the present invention as recited in the appended claims.

Terms used in embodiments of the present invention are only for the purpose of describing specific embodiments, and should not be construed to limit the present invention. As used in the embodiments of the present invention and the appended claims, "a/an", "said" and "the" in a singular form are intended to include plural forms, unless clearly indicated in the context otherwise. It should also be understood that, the term "and/or" used herein represents and contains any one of associated listed items or all possible combinations of more than one associated listed items.

It should be understood that terms such as "first," "second" and "third" may be used in the embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of embodiments of the present invention. As used herein, the term "if" may be construed to mean "when" or "upon" or "in response to determining" depending on the context.

Embodiments of the present invention will be described in detail and examples of embodiments are illustrated in the drawings. The same or similar elements and the elements having the same or similar functions are denoted by like reference numerals throughout the descriptions. Embodiments described herein with reference to drawings are explanatory, serve to explain the present invention, and are not construed to limit the embodiments of the present invention.

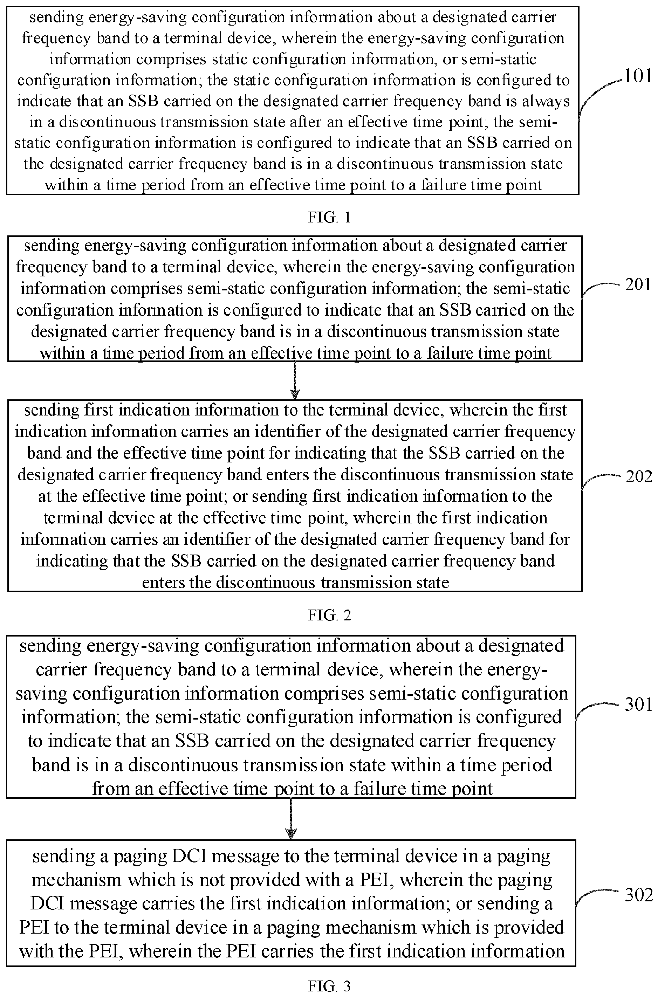

FIG. 1 is a flow chart of an energy-saving configuration method provided by an embodiment of the present invention. It should be noted that the method for the energy-saving configuration of embodiments of the present invention is performed by a network device.

As shown in FIG. 1, the method may include the following step.

In block 101, energy-saving configuration information about a designated carrier frequency band is sent to a terminal device, and the energy-saving configuration information includes: static configuration information, or semi-static configuration information. The static configuration information is configured to indicate that an SSB carried on the designated carrier frequency band is always in a discontinuous transmission state after an effective time point. The semi-static configuration information is configured to indicate that an SSB carried on the designated carrier frequency band is in the discontinuous transmission state within a time period from an effective time point to a failure time point.

As a possible implementation manner of embodiments of the present invention, the network device may send a radio resource control (RRC) message to the terminal device, and the RRC message includes the energy-saving configuration information about the designated carrier frequency band. It should be noted that the energy-saving configuration information may include: the static configuration information, or the semi-static configuration information. The designated carrier frequency band is one or more carrier frequency bands for a multi-carrier frequency band cell to which the terminal device belongs; or the designated carrier frequency band is a carrier frequency band of a designated macro cell, and/or a carrier frequency band of a hotspot cell located within a coverage area of the designated macro cell.

As an example, the energy-saving configuration information includes: the static configuration information, which may be configured to indicate that the SSB (also referred as a synchronization signal and PBCH block) carried on the designated carrier frequency band is always in the discontinuous transmission state after the effective time point.

That is, in order to reduce the resource consumption of the network device, in the case where the number of terminal devices in the defined cell is small, the network device may configure the static configuration information and an effective time of the static configuration information, that is, the static configuration information may indicate that the SSB carried on the designated carrier frequency band is always in the discontinuous transmission state after the effective time point. It should be noted that the static configuration information may include: a static configuration type, a cycle of discontinuous transmission, and a non-transmission time period and a transmission time period within each cycle. For example, the cycle of discontinuous transmission in the static configuration information is once per second, and the transmission time period in each cycle may be any consecutive 200 milliseconds in the cycle. Within the cycle, the time other than the transmission time period may be the non-transmission time period.

As another example, the energy-saving configuration information includes: the semi-static configuration information, which is configured to indicate that the SSB carried on the designated carrier frequency band is in the discontinuous transmission state within the time period from the effective time point to the failure time point.

That is, in order to reduce the resource consumption of the network device, in the case where the number of terminal devices in the defined cell is small, the network device may configure the semi-static configuration information and the effective time and the failure time of the semi-static configuration information, and the semi-static configuration information may indicate that the SSB carried on the designated carrier frequency band is in the discontinuous transmission state within the time period from the effective time point to the failure time point. It should be noted that the semi-static configuration information includes: a semi-static configuration type, a cycle of discontinuous transmission, and a non-transmission time period and a transmission time period within each cycle.

In the embodiments of the present invention, the network device is for example a base station. The base station may include multiple cells that provide services to the terminal device. For example, the base station involved in the embodiments of the present invention may be a base transceiver station (BTS) in a global system for mobile communications (GSM) or code division multiple access (CDMA), or may be a NodeB in wide-band code division multiple access (WCDMA), or may be an evolutional Node B (abbreviated as eNB or e-NodeB) in a long term evolution (LTE) system or a 5G base station (abbreviated as gNB) in a next generation system, or may be a home evolved Node B (HeNB), a relay node, a home base station (femto), a pico base station (pico), etc., and is not limited in embodiments of the present invention.

The terminal device may be a device that provides voice and/or data connectivity to a user, a handheld device with a wireless connection capability, or other processing device connected to a wireless modem, etc. In different systems, names of the terminal device may be different. For example, in a 5G system, the terminal device may be called a user equipment (UE). The radio terminal device may communicate with one or more core networks (CNs) via a radio access network (RAN). The radio terminal device may be a mobile terminal device, such as a mobile phone (or referred to as a "cellular" phone) and a computer with the mobile terminal device. For example, it may be a portable, pocket-size, handheld, built-in computer or vehicle-mounted mobile device, which exchanges language and/or data with the radio access network.

For example, the terminal device may be a personal communication service (PCS) phone, a cordless phone, a session initiated protocol (SIP) phone, a wireless local loop (WLL) station, a personal digital assistant (PDA) and other devices. The radio terminal device may also be called a system, a subscriber unit, a subscriber station, a mobile station, a mobile, a remote station, an access point, a remote terminal, an access terminal, a user terminal, a user agent, a user device, and is not limited in embodiments of the present invention.

Accordingly, the static configuration information or the semi-static configuration information of the designated carrier frequency band is sent to the terminal device. The static configuration information indicates that the SSB carried on the designated carrier frequency band is always in the discontinuous transmission state after the effective time point, and the semi-static configuration information indicates that the SSB carried on the designated carrier frequency band is in the discontinuous transmission state within the time period from the effective time point to the failure time point. Therefore, in the case where the number of terminal devices in the defined cell is small, the SSB carried on the designated carrier frequency band may be in the discontinuous transmission state according to the static configuration information or the semi-static configuration information about the designated carrier frequency band, reducing the resource consumption of the network device.

Embodiments of the present invention provide another energy-saving configuration method. FIG. 2 is a flow chart of an energy-saving configuration method provided by an embodiment of the present invention. The energy-saving configuration method may be performed by the network device, and the energy-saving configuration method may be performed independently, or may be performed in combination with any one of embodiments of the present invention or any possible implementation in embodiments, or may be performed in combination with any technical solution in the relevant art.

As shown in FIG. 2, the method may include the following steps.

In block 201, the energy-saving configuration information about the designated carrier frequency band is sent to the terminal device, where the energy-saving configuration information includes the semi-static configuration information. The semi-static configuration information is configured to indicate that the SSB carried on the designated carrier frequency band is in the discontinuous transmission state within the time period from the effective time point to the failure time point.

In block 202, first indication information is sent to the terminal device, where the first indication information carries an identifier of the designated carrier frequency band and the effective time point for indicating that the SSB carried on the designated carrier frequency band enters the discontinuous transmission state at the effective time point; or first indication information is sent to the terminal device at the effective time point, where the first indication information carries an identifier of the designated carrier frequency band for indicating that the SSB carried on the designated carrier frequency band enters the discontinuous transmission state.

In order to indicate to the terminal device that the SSB carried on the designated carrier frequency band enters the discontinuous transmission state at the effective time point, in embodiments of the present invention, after the network device sends the semi-static configuration information to the terminal device, the network device may send the first indication information to the terminal device. It should be noted that a number of pieces of the semi-static configuration information may be at least one.

As an example, in a case that the number of pieces of the semi-static configuration information is one, the network device may send the first indication information carrying the identifier of the designated carrier frequency band and the effective time point to the terminal device, and may instruct, according to the identifier of the designated carrier frequency band and the effective time point carried in the first indication information, the terminal device that the SSB carried on the designated carrier frequency band enters the discontinuous transmission state at the effective time. In a case that the number of pieces of the semi-static configuration information is two or more, the first indication information carries a target configuration identifier of the designated carrier frequency band for indicating that the terminal device receives information of the SSB sent by the network device based on the semi-static configuration information corresponding to the target configuration identifier after the SSB carried on the designated carrier frequency band enters the discontinuous transmission state.

As another example, in the case that the number of pieces of the semi-static configuration information is one, the network device may send the first indication information carrying the identifier of the designated carrier frequency band to the terminal device at the effective time point, and may instruct, according to the identifier of the designated carrier frequency band carried in the first indication information, the terminal device that the SSB carried on the designated carrier frequency band enters the discontinuous transmission state at the effective time. In the case that the number of pieces of the semi-static configuration information is two or more, the first indication information carries the target configuration identifier of the designated carrier frequency band for indicating that the terminal device receives information of the SSB sent by the network device based on the semi-static configuration information corresponding to the target configuration identifier after the SSB carried on the designated carrier frequency band enters the discontinuous transmission state.

In addition, in order to enable the SSB carried on the carrier frequency band of the terminal device satisfy a measurement requirement, the first indication information sent by the network device to the terminal device may further carry a target identifier, and according to the target identifier, the terminal device may reorient to a target carrier frequency band corresponding to the target identifier, where the SSB carried on the target carrier frequency band is in a continuous transmission state. For example, in a case that the measurement requirement of the terminal device is large, the terminal device is reoriented to the target carrier frequency band corresponding to the target identifier according to the target identifier carried in the first indication information, and the SSB carried on the target carrier frequency band is in the continuous transmission state.

In embodiments of the present invention, the step in block 201 may be implemented according to any one of embodiments of the present invention, and embodiments of the present invention are not limited thereto and will not be described in detail.

Accordingly, the network device sends the first indication information to the terminal device after sending the semi-static configuration information to the terminal device, where the first indication information carries the identifier of the designated carrier frequency band and the effective time point for indicating that the SSB carried on the designated carrier frequency band enters the discontinuous transmission state at the effective time point; or the first indication information is sent to the terminal device at the effective time point, where the first indication information carries the identifier of the designated carrier frequency band for indicating that the SSB carried on the designated carrier frequency band enters the discontinuous transmission state. Therefore, the terminal may be instructed that the SSB carried on the designated carrier frequency band enters the discontinuous transmission state at the effective time point according to the first indication information.

Embodiments of the present invention provide a further energy-saving configuration method. FIG. 3 is a flow chart of an energy-saving configuration method provided by embodiments of the present invention, where the energy-saving configuration method may be performed by the network device, and the energy-saving configuration method may be performed independently, or may be performed in combination with any one of embodiments of the present invention or any possible implementations in embodiments, or may be performed in combination with any one of the technical solutions in the relevant art.

As shown in FIG. 3, the method may include the following steps.

In block 301, the energy-saving configuration information about the designated carrier frequency band is sent to the terminal device, where the energy-saving configuration information includes the semi-static configuration information. The semi-static configuration information is configured to indicate that the SSB carried on the designated carrier frequency band is in the discontinuous transmission state within the time period from the effective time point to the failure time point.

In block 302, a paging downlink control information (DCI) message is sent to the terminal device in a paging mechanism which is not provided with a paging early indication (PEI), where the paging DCI message carries the first indication information; or a PEI is sent to the terminal device in a paging mechanism which is provided with the PEI, where the PEI carries the first indication information.

In embodiments of the present invention, in order to accurately send the first indication information to the terminal device, a manner of sending the first indication information to the terminal device may be determined according to the paging mechanism and whether the network device sets the PEI for the paging mechanism. The first indication information carries the identifier of the designated carrier frequency band and the effective time point for indicating that the SSB carried on the designated carrier frequency band enters the discontinuous transmission state at the effective time point, or the first indication information carries the identifier of the designated carrier frequency band for indicating that the SSB carried on the designated carrier frequency band enters the discontinuous transmission state.

As an example, the paging DCI message is sent to the terminal device in the paging mechanism which is not provided with the PEI, where the paging DCI message carries the first indication information.

That is, in a case that the PEI is not set in the paging mechanism, the network device may send the DCI message carrying the first indication information to the terminal device.

As another example, the PEI is sent to the terminal device in the paging mechanism which is provided with the PEI, where the PEI carries the first indication information.

That is, in a case that the PEI is set in the paging mechanism, the network device may send the PEI carrying the first indication information to the terminal device.

In embodiments of the present invention, the step in block 301 may be implemented according to any one of embodiments of the present invention, and embodiments of the present invention are not limited thereto and will not be described in detail.

Accordingly, the paging DCI message is sent to the terminal device in the paging mechanism which is not provided with the PEI, where the paging DCI message carries the first indication information, or the PEI is sent to the terminal device in the paging mechanism which is provided with the PEI, where the PEI carries the first indication information. In this way, the first indication information may be accurately sent to the terminal device.

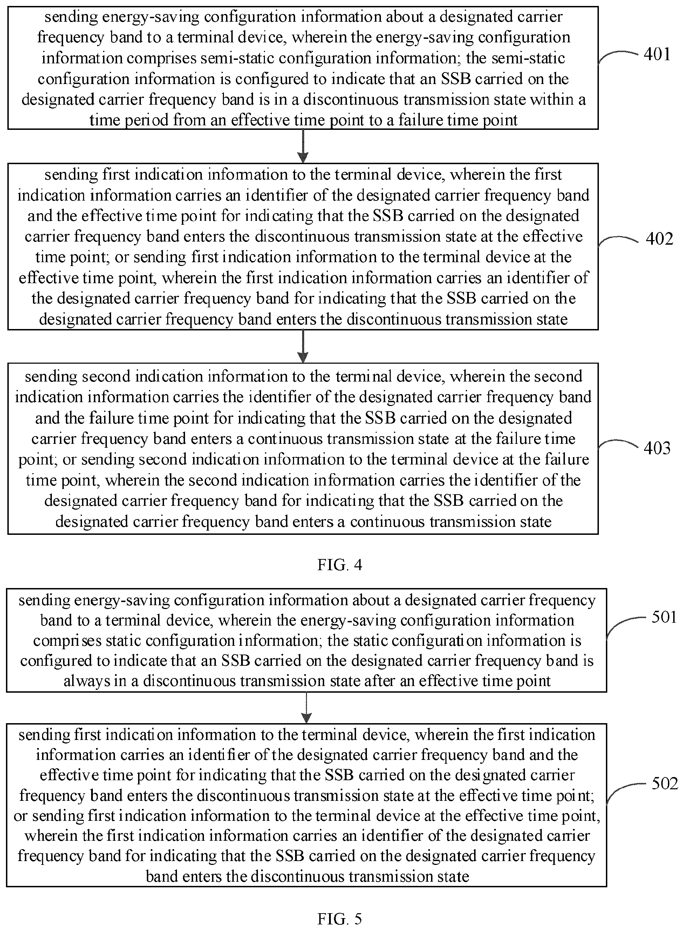

Embodiments of the present invention provide a further energy-saving configuration method. FIG. 4 is a flow chart of an energy-saving configuration method provided by embodiments of the present invention, where the energy-saving configuration method may be performed by the network device, and the energy-saving configuration method may be performed independently, or may be performed in combination with any one of embodiments of the present invention or any possible implementations in the embodiments, or may be performed in combination with any one of the technical solutions in the relevant art.

As shown in FIG. 4, the method may include the following steps.

In block 401, the energy-saving configuration information about the designated carrier frequency band is sent to the terminal device, where the energy-saving configuration information includes: the semi-static configuration information. The semi-static configuration information is configured to indicate that the SSB carried on the designated carrier frequency band is in the discontinuous transmission state within the time period from the effective time point to the failure time point.

In block 402, the first indication information is sent to the terminal device, where the first indication information carries the identifier of the designated carrier frequency band and the effective time point for indicating that the SSB carried on the designated carrier frequency band enters the discontinuous transmission state at the effective time point; or the first indication information is sent to the terminal device at the effective time point, where the first indication information carries the identifier of the designated carrier frequency band for indicating that the SSB carried on the designated carrier frequency band enters the discontinuous transmission state.

In block 403, second indication information is sent to the terminal device, where the second indication information carries the identifier of the designated carrier frequency band and the failure time point for indicating that the SSB carried on the designated carrier frequency band enters a continuous transmission state at the failure time point; or the second indication information is sent to the terminal device at the failure time point, where the second indication information carries the identifier of the designated carrier frequency band for indicating that the SSB carried on the designated carrier frequency band enters the continuous transmission state.

In order to instruct the terminal device that the SSB carried on the designated carrier frequency band enters the continuous transmission state at the failure time point, in embodiments of the present invention, the second indication information may be sent to the terminal device.

As an example, the second indication information is sent to the terminal device, where the second indication information carries the identifier of the designated carrier frequency band and the failure time point for indicating that the SSB carried on the designated carrier frequency band enters the continuous transmission state at the failure time point.

That is, the network device may set the identifier of the designated carrier frequency band and the failure time point in the second indication information, and the network device sends the second indication information carrying the identifier of the designated carrier frequency band and the failure time point to the terminal device. According to the second indication information, the terminal device may be instructed that the SSB carried on the designated carrier frequency band enters the continuous transmission state at the failure time point.

As another example, the second indication information is sent to the terminal device at the failure time point, where the second indication information carries the identifier of the designated carrier frequency band for indicating that the SSB carried on the designated carrier frequency band enters the continuous transmission state.

That is, the network device may send the second indication information carrying the identifier of the designated carrier frequency band to the terminal device at the failure time point. According to the second indication information, the terminal device may be instructed that the SSB carried on the designated carrier frequency band enters the continuous transmission state at the failure time point.

Accordingly, the second indication information is sent to the terminal device, where the second indication information carries the identifier of the designated carrier frequency band and the failure time point for indicating that the SSB carried on the designated carrier frequency band enters the continuous transmission state at the failure time point; or the second indication information is sent to the terminal device at the failure time point, where the second indication information carries the identifier of the designated carrier frequency band for indicating that the SSB carried on the designated carrier frequency band enters the continuous transmission state. In this way, the terminal device is instructed that the SSB carried on the designated carrier frequency band enters the continuous transmission state at the failure time point.

Embodiments of the present invention provide a further energy-saving configuration method. FIG. 5 is a flow chart illustrating an energy-saving configuration method provided by embodiments of the present invention, where the energy-saving configuration method may be performed by the network device, and the energy-saving configuration method may be performed independently, or may be performed in combination with any one of embodiments of the present invention or any possible implementations in embodiments, or may be performed in combination with any one of the technical solutions in the relevant art.

As shown in FIG. 5, the method may include the following steps.

In block 501, the energy-saving configuration information about the designated carrier frequency band is sent to the terminal device, where the energy-saving configuration information includes the static configuration information. The static configuration information is configured to indicate that the SSB carried on the designated carrier frequency band is always in the discontinuous transmission state after the effective time point.

In block 502, the first indication information is sent to the terminal device, where the first indication information carries the identifier of the designated carrier frequency band and the effective time point for indicating that the SSB carried on the designated carrier frequency band enters the discontinuous transmission state at the effective time point; or the first indication information is sent to the terminal device at the effective time point, where the first indication information carries the identifier of the designated carrier frequency band for indicating that the SSB carried on the designated carrier frequency band enters the discontinuous transmission state.

In order to instruct the terminal device that the SSB carried on the designated carrier frequency band enters the discontinuous transmission state at the effective time point, in embodiments of the present invention, after the network device sends the static configuration information to the terminal device, the network device may send the first indication information to the terminal device. It should be noted that a number of pieces of the static configuration information may be one or more.

As an example, in a case that the number of pieces of the static configuration information is one, the network device may send the first indication information carrying the identifier of the designated carrier frequency band and the effective time point to the terminal device, and may instruct, according to the identifier of the designated carrier frequency band and the effective time point carried in the first indication information, the terminal device that the SSB carried on the designated carrier frequency band enters the discontinuous transmission state at the effective time. In a case that the number of pieces of the static configuration information is two or more, the first indication information carries the target configuration identifier of the designated carrier frequency band for indicating that the terminal device receives the SSB information sent by the network device based on the static configuration information corresponding to the target configuration identifier after the SSB carried on the designated carrier frequency band enters the discontinuous transmission state.

As another example, in the case that the number of pieces of the static configuration information is one, the network device may send the first indication information carrying the identifier of the designated carrier frequency band to the terminal device at the effective time point, and may instruct, according to the identifier of the designated carrier frequency band carried in the first indication information, the terminal device that the SSB carried on the designated carrier frequency band enters the discontinuous transmission state at the effective time. In the case that the number of pieces of the static configuration information is two or more, the first indication information carries the target configuration identifier of the designated carrier frequency band for indicating that the terminal device receives the SSB information sent by the network device based on the static configuration information corresponding to the target configuration identifier after the SSB carried on the designated carrier frequency band enters the discontinuous transmission state.

In addition, in order to enable the SSB carried on the carrier frequency band of the terminal device satisfy the measurement requirement, the first indication information sent by the network device to the terminal device may further carry the target identifier, and the terminal device may be reoriented to the target carrier frequency band corresponding to the target identifier according to the target identifier, where the SSB carried on the target carrier frequency band is in the continuous transmission state. For example, in the case that the measurement requirement of the terminal device is large, the terminal device is reoriented to the target carrier frequency band corresponding to the target identifier according to the target identifier carried in the first indication information, and the SSB carried on the target carrier frequency band is in the continuous transmission state.

With the energy-saving configuration method of the embodiments of the present invention, the energy-saving configuration information about the designated carrier frequency band is sent to the terminal device, where the energy-saving configuration information includes: the static configuration information, or the semi-static configuration information. The static configuration information is configured to indicate that the SSB carried on the designated carrier frequency band is always in the discontinuous transmission state after the effective time point; and the semi-static configuration information is configured to indicate that the SSB carried on the designated carrier frequency band is in the discontinuous transmission state within the time period from the effective time point to the failure time point. In this method, the network device sends the static configuration information or the semi-static configuration information of the designated carrier frequency band to the terminal device. The static configuration information indicates that the SSB carried on the designated carrier frequency band is always in the discontinuous transmission state after the effective time point, and the semi-static configuration information indicates that the SSB carried on the designated carrier frequency band is in the discontinuous transmission state within the time period from the effective time point to the failure time point. Therefore, in the case where the number of terminal devices in the defined cell is small, the SSB carried on the designated carrier frequency band may be in the discontinuous transmission state according to the static configuration information or the semi-static configuration information about the designated carrier frequency band, reducing the resource consumption of the network device.

It should be noted that the above possible implementation methods may be performed individually or in combination, and embodiments of the present invention are not limited thereto.

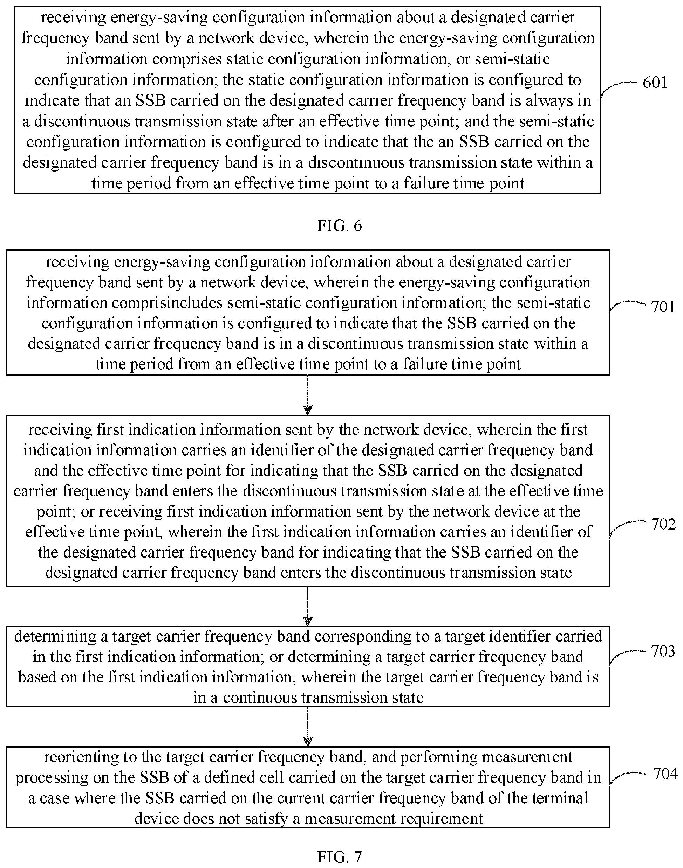

Embodiments of the present invention provide a further energy-saving configuration method. FIG. 6 is a flow chart of an energy-saving configuration method provided by embodiments of the present invention. The method for the energy-saving configuration of embodiments of the present invention is performed by a terminal device.

As shown in FIG. 6, the method may include the following step.

In block 601, the energy-saving configuration information about the designated carrier frequency band sent by the network device is received, where the energy-saving configuration information includes: the static configuration information, or the semi-static configuration information. The static configuration information is configured to indicate that the SSB carried on the designated carrier frequency band is always in the discontinuous transmission state after the effective time point. The semi-static configuration information is configured to indicate that the SSB carried on the designated carrier frequency band is in the discontinuous transmission state within the time period from the effective time point to the failure time point.

As a possible implementation manner of embodiments of the present invention, the network device may send the RRC message to the terminal device, and the terminal device receives the RRC message sent by the network device, where the RRC message includes the energy-saving configuration information about the designated carrier frequency band. It should be noted that the energy-saving configuration information may include: the static configuration information, or the semi-static configuration information. The designated carrier frequency band is one or more carrier frequency bands of the multi-carrier frequency band cell to which the terminal device belongs; or the designated carrier frequency band is the carrier frequency band of the designated macro cell, and/or the carrier frequency band of the hotspot cell located within the coverage area of the designated macro cell.

As an example, the energy-saving configuration information includes: the static configuration information, which may be configured to indicate that the SSB carried on the designated carrier frequency band is always in the discontinuous transmission state after the effective time point.

That is, in order to reduce the resource consumption of the network device, in the case where the number of terminal devices in the defined cell is small, the network device may configure the static configuration information and the effective time of the static configuration information, that is, the static configuration information may indicate that the SSB carried on the designated carrier frequency band is always in the discontinuous transmission state after the effective time point. It should be noted that the static configuration information may include: the static configuration type, the cycle of discontinuous transmission, and the non-transmission time period and the transmission time period within each cycle. For example, the cycle of discontinuous transmission in the static configuration information is once per second, and the transmission period in each cycle may be any consecutive 200 milliseconds in the period. Within the cycle, the time other than the transmission time period may be the non-transmission time period.

As another example, the energy-saving configuration information includes: the semi-static configuration information, which is configured to indicate that the SSB carried on the designated carrier frequency band is in the discontinuous transmission state within the time period from the effective time point to the failure time point.

That is, in order to reduce the resource consumption of the network device, in the case where the number of terminal devices in the defined cell is small, the network device may configure the semi-static configuration information and the effective time and failure time of the semi-static configuration information, and the semi-static configuration information may indicate that the SSB carried on the designated carrier frequency band is in the discontinuous transmission state within the time period from the effective time point to the failure time point. It should be noted that the semi-static configuration information includes: the semi-static configuration type, the cycle of discontinuous transmission, and the non-transmission time period and the transmission time period within each cycle.

Accordingly, the static configuration information or the semi-static configuration information of the designated carrier frequency band sent by the network device is received. The static configuration information indicates that the SSB carried on the designated carrier frequency band is always in the discontinuous transmission state after the effective time point, and the semi-static configuration information indicates that the SSB carried on the designated carrier frequency band is in the discontinuous transmission state within the time period from the effective time point to the failure time point. Therefore, in the case where the number of terminal devices in the defined cell is small, the SSB carried on the designated carrier frequency band may be in the discontinuous transmission state according to the static configuration information or the semi-static configuration information about the designated carrier frequency band, reducing the resource consumption of the network device.

Embodiments of the present invention provide a further energy-saving configuration method. FIG. 7 is a flow chart illustrating an energy-saving configuration method provided by embodiments of the present invention, where the energy-saving configuration method may be performed by the terminal device, and the energy-saving configuration method may be performed independently, or may be performed in combination with any one of embodiments of the present invention or any possible implementations in embodiments, or may be executed in combination with any one of the technical solutions in the relevant art.

As shown in FIG. 7, the method may include the following steps.

In block 701, the energy-saving configuration information about the designated carrier frequency band sent by the network device is received, where the energy-saving configuration information includes: the semi-static configuration information. The semi-static configuration information is configured to indicate that the SSB carried on the designated carrier frequency band is in the discontinuous transmission state within the time period from the effective time point to the failure time point.

In block 702, the first indication information sent by the network device is received, where the first indication information carries the identifier of the designated carrier frequency band and the effective time point for indicating that the SSB carried on the designated carrier frequency band enters the discontinuous transmission state at the effective time point; or the first indication information sent by the network device is received at the effective time point, where the first indication information carries the identifier of the designated carrier frequency band for indicating that the SSB carried on the designated carrier frequency band enters the discontinuous transmission state.

In order to instruct the terminal device that the SSB carried on the designated carrier frequency band enters the discontinuous transmission state at the effective time point, in embodiments of the present invention, after the network device sends the semi-static configuration information to the terminal device, the network device may send the first indication information to the terminal device, and the terminal device may receive the first indication information sent by the network device. It should be noted that the number of pieces of the semi-static configuration information may be at least one.

As an example, in the case that the number of pieces of the semi-static configuration information is one, the terminal device may receive the first indication information carrying the identifier of the designated carrier frequency band and the effective time point sent by the network device, and the network device may instruct, according to the identifier of the designated carrier frequency band and the effective time point carried in the first indication information, the terminal device that the SSB carried on the designated carrier frequency band enters the discontinuous transmission state at the effective time. In the case that the number of pieces of the semi-static configuration information is two or more, the first indication information carries the target configuration identifier of the designated carrier frequency band for indicating that the terminal device may receive the SSB information sent by the network device based on the semi-static configuration information corresponding to the target configuration identifier after the SSB carried on the designated carrier frequency band enters the discontinuous transmission state.

As another example, in the case that the number of pieces of the semi-static configuration information is one, the terminal device may receive the first indication information carrying the identifier of the designated carrier frequency band sent by the network device at the effective time point. The network device may instruct, according to the identifier of the designated carrier frequency band carried in the first indication information, the terminal device that the SSB carried on the designated carrier frequency band enters the discontinuous transmission state at the effective time. In the case that the number of pieces of the semi-static configuration information is two or more, the first indication information carries the target configuration identifier of the designated carrier frequency band for indicating that the terminal device may receive the SSB information sent by the network device based on the semi-static configuration information corresponding to the target configuration identifier after the SSB carried on the designated carrier frequency band enters the discontinuous transmission state.

In block 703, the target carrier frequency band corresponding to the target identifier carried in the first indication information is determined; or the target carrier frequency band is determined based on the first indication information; where the target carrier frequency band is in the continuous transmission state.

In embodiments of the present invention, the terminal device may determine the target carrier frequency band according to the first indication information after the network device sends the first indication information to the terminal device.

As an example, the first indication information sent by the network device to the terminal device may further carry the target identifier, and the terminal device may determine, based on the target identifier, the target carrier frequency band corresponding to the target identifier.

As another example, the terminal device determines according to the identifier of the designated carrier frequency band in the first indication information sent by the network device that the SSB carried on the designated carrier frequency band corresponding to the identifier of the designated carrier frequency band enters the discontinuous transmission state at the effective time point, and takes other carrier frequency bands except the designated carrier frequency band as the target carrier frequency bands.

In block 704, in a case where the SSB carried on the current carrier frequency band of the terminal device does not satisfy the measurement requirement, the SSB carried on a current carrier frequency band of the terminal device is reoriented to the target carrier frequency band, and measurement processing is performed on the SSB of the defined cell carried on the target carrier frequency band.

In addition, in order to enable the SSB carried on the carrier frequency band of the terminal device satisfy the measurement requirement, the terminal device is reoriented to the target carrier frequency band corresponding to the target identifier according to the target identifier carried on the first indication information, where the SSB carried on the target carrier frequency band is in the continuous transmission state. For example, in the case that the measurement requirement of the terminal device is large, the terminal device is reoriented to the target carrier frequency band corresponding to the target identifier according to the target identifier carried in the first indication information, and the SSB carried on the target carrier frequency band is in the continuous transmission state.

It should be noted that the above explanation for the energy-saving configuration method performed by the network device in any of embodiments of FIGS. 1 to 5 is also applicable to the energy-saving configuration method performed by the terminal device in the embodiments, and they have the similar implementation principle, which will not be described in detail here.

Accordingly, the first indication information sent by the network device is received, where the first indication information carries the identifier of the designated carrier frequency band and the effective time point for indicating that the SSB carried on the designated carrier frequency band enters the discontinuous transmission state at the effective time point; or the first indication information sent by the network device is received at the effective time point, where the first indication information carries the identifier of the designated carrier frequency band for indicating that the SSB carried on the designated carrier frequency band enters the discontinuous transmission state. The target carrier frequency band corresponding to the target identifier carried in the first indication information is determined; or the target carrier frequency band is determined based on the first indication information; where the target carrier frequency band is in the continuous transmission state. When the SSB carried on the current carrier frequency band of the terminal device does not satisfy the measurement requirement, the SSB carried on the current carrier frequency band of the terminal device is reoriented to the target carrier frequency band, and the measurement processing is performed on the SSB of the defined cell carried on the target carrier frequency band. In this way, the terminal may be instructed according to the first indication information that the SSB carried on the designated carrier frequency band enters the discontinuous transmission state at the effective time point, and the terminal device may be reoriented to the target carrier frequency band being in the continuous transmission state according to the first indication information to meet the measurement requirement.

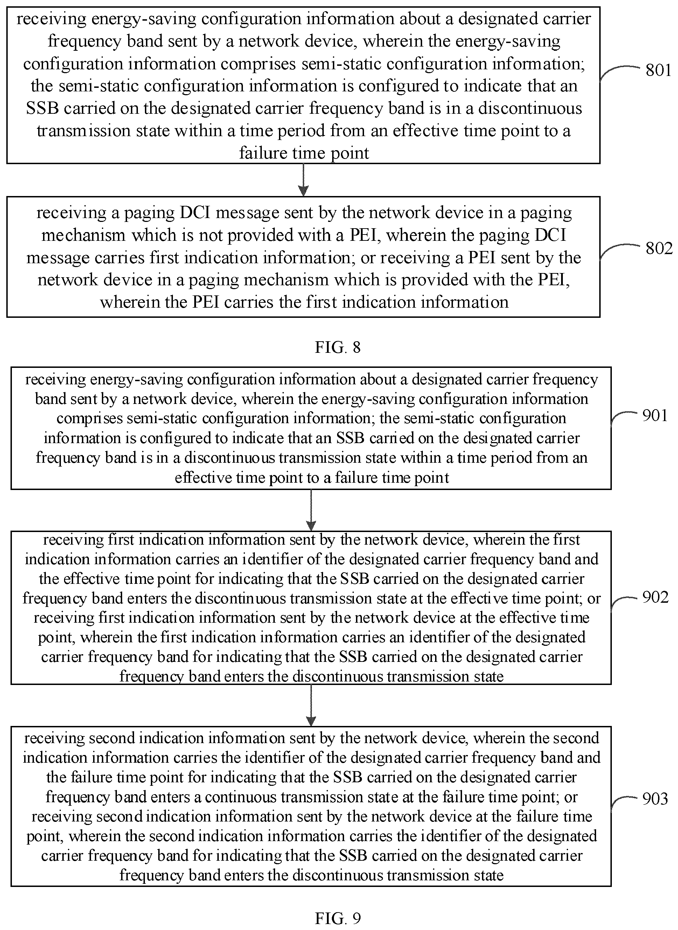

Embodiments of the present invention provide a further energy-saving configuration method. FIG. 8 is a flow chart of an energy-saving configuration method provided by embodiments of the present invention, where the energy-saving configuration method may be performed by the terminal device, and the energy-saving configuration method may be performed independently, or may be performed in combination with any one of embodiments of the present invention or any possible implementations in the embodiments, or may be performed in combination with any one of the technical solutions in the relevant art.

As shown in FIG. 8, the method may include the following steps.

In block 801, the energy-saving configuration information about the designated carrier frequency band sent by the network device is received, where the energy-saving configuration information includes: the semi-static configuration information. The semi-static configuration information is configured to indicate that the SSB carried on the designated carrier frequency band is in the discontinuous transmission state within the time period from the effective time point to the failure time point.

In block 802, the paging DCI message sent by the network device is received in the paging mechanism which is not provided with the PEI, where the paging DCI message carries the first indication information; or the PEI sent by the network device is received in the paging mechanism which is provided with the PEI, where the PEI carries the first indication information.

It should be noted that the above explanation for the energy-saving configuration method performed by the network device in any of the embodiments of FIGS. 1 to 5 is also applicable to the energy-saving configuration method performed by the terminal device in the embodiments, and they have similar implementation principle which will not be described in detail here again.

Accordingly, the paging DCI message sent by the network device is received in the paging mechanism which is not provided with the PEI, where the paging DCI message carries the first indication information, or the PEI sent by the network device is received in the paging mechanism which is provided with the PEI, where the PEI carries the first indication information. In this way, the terminal device may accurately receive the first indication information sent by the network device.

Embodiments of the present invention provide a further energy-saving configuration method. FIG. 9 is a flow chart of an energy-saving configuration method provided by embodiments of the present invention, where the energy-saving configuration method may be performed by the terminal device, and the energy-saving configuration method may be performed independently, or may be performed in combination with any one of embodiments of the present invention or any possible implementations in the embodiments, or may be performed in combination with any one of the technical solutions in the relevant art.

As shown in FIG. 9, the method may include the following steps.

In block 901, the energy-saving configuration information about the designated carrier frequency band sent by the network device is received, where the energy-saving configuration information includes: the semi-static configuration information. The semi-static configuration information is configured to indicate that the SSB carried on the designated carrier frequency band is in the discontinuous transmission state within the time period from the effective time point to the failure time point.

In block 902, the first indication information sent by the network device is received, where the first indication information carries the identifier of the designated carrier frequency band and the effective time point for indicating that the SSB carried on the designated carrier frequency band enters the discontinuous transmission state at the effective time point; or the first indication information sent by the network device is received at the effective time point, where the first indication information carries the identifier of the designated carrier frequency band for indicating that the SSB carried on the designated carrier frequency band enters the discontinuous transmission state.

In block 903, the second indication information sent by the network device is received, where the second indication information carries the identifier of the designated carrier frequency band and the failure time point for indicating that the SSB carried on the designated carrier frequency band enters the continuous transmission state at the failure time point; or the second indication information sent by the network device is received at the failure time point, where the second indication information carries the identifier of the designated carrier frequency band for indicating that the SSB carried on the designated carrier frequency band enters the discontinuous transmission state.

It should be noted that the above explanation for the energy-saving configuration method performed by the network device in any of the embodiments of FIGS. 1 to 5 is also applicable to the energy-saving configuration method performed by the terminal device in the embodiments, and they have the similar implementation principle which will not be described in detail here again.

Accordingly, the second indication information sent by the network device is received, where the second indication information carries the identifier of the designated carrier frequency band and the failure time point for indicating that the SSB carried on the designated carrier frequency band enters the continuous transmission state at the failure time point; or the second indication information sent by the network device is received at the failure time point, where the second indication information carries the identifier of the designated carrier frequency band for indicating that the SSB carried on the designated carrier frequency band enters the discontinuous transmission state. In this way, the network device may instruct the terminal device that the SSB carried on the designated carrier frequency band enters the continuous transmission state at the failure time point.

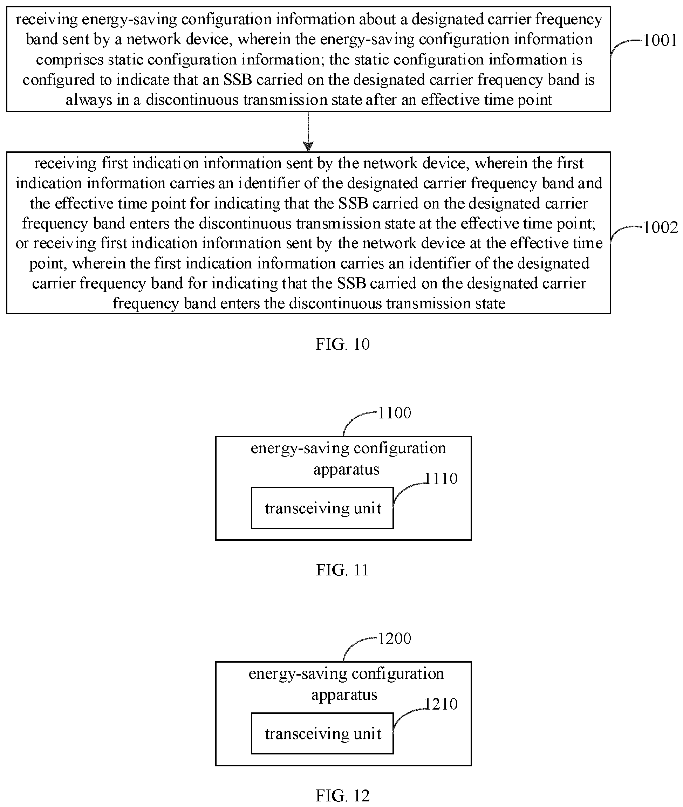

Embodiments of the present invention provide a further energy-saving configuration method. FIG. 10 is a flow chart of an energy-saving configuration method provided by embodiments of the present invention, where the energy-saving configuration method may be performed by the network device, and the energy-saving configuration method may be performed independently, or may be performed in combination with any one of embodiments of the present invention or any possible implementations in the embodiments, or may be performed in combination with any one of the technical solutions in the relevant art.

As shown in FIG. 10, the method may include the following steps.

In block 1001, the energy-saving configuration information about the designated carrier frequency band sent by the network device is received, where the energy-saving configuration information includes: the static configuration information. The static configuration information is configured to indicate that the SSB carried on the designated carrier frequency band is always in the discontinuous transmission state after the effective time point.

In block 1002, the first indication information sent by the network device is received, where the first indication information carries the identifier of the designated carrier frequency band and the effective time point for indicating that the SSB carried on the designated carrier frequency band enters the discontinuous transmission state at the effective time point; or the first indication information sent by the network device is received at the effective time point, where the first indication information carries the identifier of the designated carrier frequency band for indicating that the SSB carried on the designated carrier frequency band enters the discontinuous transmission state.

Accordingly, the first indication information sent by the network device is received, where the first indication information carries the identifier of the designated carrier frequency band and the effective time point for indicating that the SSB carried on the designated carrier frequency band enters the discontinuous transmission state at the effective time point; or the first indication information sent by the network device is received at the effective time point, where the first indication information carries the identifier of the designated carrier frequency band for indicating that the SSB carried on the designated carrier frequency band enters the discontinuous transmission state. In this way, the terminal device may be instructed according to the first indication information that the SSB carried on the designated carrier frequency band enters the discontinuous transmission state at the effective time point.

It should be noted that the above possible implementations may be executed individually or in combination, which are not limited in the embodiments of the present invention.

With the energy-saving configuration method of embodiments of the present invention, the energy-saving configuration information about the designated carrier frequency band sent by the network device is received, where the energy-saving configuration information includes: the static configuration information, or the semi-static configuration information. The static configuration information is configured to indicate that the SSB carried on the designated carrier frequency band is always in the discontinuous transmission state after the effective time point. The semi-static configuration information is configured to indicate that the SSB carried on the designated carrier frequency band is in the discontinuous transmission state within the time period from the effective time point to the failure time point. In this method, the static configuration information or the semi-static configuration information of the designated carrier frequency band sent by the network device is received. The static configuration information indicates that the SSB carried on the designated carrier frequency band is always in the discontinuous transmission state after the effective time point, and the semi-static configuration information indicates that the SSB carried on the designated carrier frequency band is in the discontinuous transmission state within the time period from the effective time point to the failure time point. Therefore, in the case where the number of terminal devices in the defined cell is small, the SSB carried on the designated carrier frequency band may be in the discontinuous transmission state according to the static configuration information or the semi-static configuration information about the designated carrier frequency band, reducing the resource consumption of the network device.

The present invention further provides an energy-saving configuration apparatus corresponding to the energy-saving configuration method provided by the above-mentioned embodiments of FIGS. 1 to 5. Since embodiments of the present invention provide the energy-saving configuration apparatus corresponding to the energy-saving configuration method provided by the above-mentioned embodiments of FIGS. 1 to 5, embodiments of the energy-saving configuration method may also be applied to the energy-saving configuration apparatus provided by embodiments of the present invention, and will not be described in detail here.

FIG. 11 is a block diagram of an energy-saving configuration apparatus provided by embodiments of the present invention. The apparatus is applied to the network device.

As shown in FIG. 11, the energy-saving configuration apparatus 1100 may include a transceiving unit 1110. The transceiving unit 1110 is configured to send the energy-saving configuration information about the designated carrier frequency band to a terminal device, where the energy-saving configuration information includes: static configuration information, or semi-static configuration information; the static configuration information is configured to indicate that an SSB carried on the designated carrier frequency band is always in a discontinuous transmission state after an effective time point; the semi-static configuration information is configured to indicate that an SSB carried on the designated carrier frequency band is in a discontinuous transmission state within a time period from an effective time point to a failure time point.

As a possible implementation of embodiments of the present invention, the static configuration information includes: a static configuration type, a cycle of discontinuous transmission, and a non-transmission time period and a transmission time period within each cycle; and the semi-static configuration information includes: a semi-static configuration type, a cycle of discontinuous transmission, and a non-transmission time period and a transmission time period within each cycle.

As a possible implementation of embodiments of the present invention, the transceiving unit 1110 is specifically configured to send an RRC message to the terminal device, where the RRC message includes the energy-saving configuration information about the designated carrier frequency band.

As a possible implementation of embodiments of the present invention, the transceiving unit 1110 is further configured to send first indication information to the terminal device, where the first indication information carries an identifier of the designated carrier frequency band and the effective time point for indicating that the SSB carried on the designated carrier frequency band enters the discontinuous transmission state at the effective time point and is always in the discontinuous transmission state; or send first indication information to the terminal device at the effective time point, where the first indication information carries an identifier of the designated carrier frequency band for indicating that the SSB carried on the designated carrier frequency band enters the discontinuous transmission state and is always in the discontinuous transmission state.

As a possible implementation of embodiments of the present invention, the transceiving unit 1110 is further configured to send first indication information to the terminal device, where the first indication information carries an identifier of the designated carrier frequency band and the effective time point for indicating that the SSB carried on the designated carrier frequency band enters the discontinuous transmission state at the effective time point; or send first indication information to the terminal device at the effective time point, where the first indication information carries an identifier of the designated carrier frequency band for indicating that the SSB carried on the designated carrier frequency band enters the discontinuous transmission state.

As a possible implementation of embodiments of the present invention, in the case where the number of pieces of the semi-static configuration information about the designated carrier frequency band is at least one, the first indication information further carries the target configuration identifier of the designated carrier frequency band for indicating that the terminal device receives information of the SSB sent by the network device based on the semi-static configuration information corresponding to the target configuration identifier after the SSB carried on the designated carrier frequency band enters the discontinuous transmission state.

As a possible implementation of embodiments of the present invention, the transceiving unit 1110 is further configured to send a paging DCI message to the terminal device in a paging mechanism which is not provided with a PEI, where the paging DCI message carries the first indication information; or send a PEI to the terminal device in a paging mechanism which is provided with the PEI, where the PEI carries the first indication information.

As a possible implementation of embodiments of the present invention, the transceiving unit 1110 is further configured to send second indication information to the terminal device, where the second indication information carries an identifier of the designated carrier frequency band and the failure time point for indicating that the SSB carried on the designated carrier frequency band enters a continuous transmission state at the failure time point; or send second indication information to the terminal device at the failure time point, where the second indication information carries an identifier of the designated carrier frequency band for indicating that the SSB carried on the designated carrier frequency band enters the continuous transmission state.

As a possible implementation of embodiments of the present invention, the first indication information further carries a target identifier for instructing the terminal device to reorient to the target carrier frequency band corresponding to the target identifier based on the measurement requirement; and where the SSB carried on the target carrier frequency band is in a continuous transmission state.

As a possible implementation of embodiments of the present invention, the designated carrier frequency band is one or more carrier frequency bands of a multi-carrier frequency band cell to which the terminal device belongs; or the designated carrier frequency band is a carrier frequency band of a designated macro cell, and/or a carrier frequency band of a hotspot cell located within a coverage area of the designated macro cell.

With the energy-saving configuration apparatus of the embodiments of the present invention, the energy-saving configuration information about the designated carrier frequency band is sent to the terminal device, where the energy-saving configuration information includes: the static configuration information, or the semi-static configuration information. The static configuration information is configured to indicate that the SSB carried on the designated carrier frequency band is always in the discontinuous transmission state after the effective time point. The semi-static configuration information is configured to indicate that the SSB carried on the designated carrier frequency band is in the discontinuous transmission state within the time period from the effective time point to the failure time point. With this apparatus, the static configuration information or the semi-static configuration information of the designated carrier frequency band is sent to the terminal device. The static configuration information indicates that the SSB carried on the designated carrier frequency band is always in the discontinuous transmission state after the effective time point, and the semi-static configuration information indicates that the SSB carried on the designated carrier frequency band is in the discontinuous transmission state within the time period from the effective time point to the failure time point. Therefore, in the case where the number of terminal devices in the defined cell is small, the SSB carried on the designated carrier frequency band may be in the discontinuous transmission state according to the static configuration information or the semi-static configuration information about the designated carrier frequency band, reducing the resource consumption of the network device.

The present invention further provides an energy-saving configuration apparatus corresponding to the energy-saving configuration method provided by the above-mentioned embodiments of FIGS. 6 to 10. Since embodiments of the present invention provide the energy-saving configuration apparatus corresponding to the energy-saving configuration method provided by the above-mentioned embodiments of FIGS. 6 to 10, embodiments of the energy-saving configuration method may also be applied to the energy-saving configuration apparatus provided by embodiments of the present invention, which will not be described in detail here.

FIG. 12 is a block diagram of an energy-saving configuration apparatus provided by embodiments of the present invention. The apparatus is applied to a network device.

As shown in FIG. 12, the energy-saving configuration apparatus 1200 may include a transceiving unit 1210. The transceiving unit 1210 is configured to receive energy-saving configuration information about a designated carrier frequency band sent by a network device, where the energy-saving configuration information includes: static configuration information, or semi-static configuration information. The static configuration information is configured to indicate that an SSB carried on the designated carrier frequency band is always in a discontinuous transmission state after an effective time point. The semi-static configuration information is configured to indicate that an SSB carried on the designated carrier frequency band is in a discontinuous transmission state within a time period from an effective time point to a failure time point.

As a possible implementation of embodiments of the present invention, the static configuration information includes: a static configuration type, a cycle of discontinuous transmission, and a non-transmission time period and a transmission time period within each cycle; and the semi-static configuration information includes: a semi-static configuration type, a cycle of discontinuous transmission, and a non-transmission time period and a transmission time period within each cycle.

As a possible implementation of embodiments of the present invention, the transceiving unit 1210 is specifically configured to: receive an RRC message sent by the network device, where the RRC message includes the energy-saving configuration information about the designated carrier frequency band.

As a possible implementation of embodiments of the present invention, the transceiving unit 1210 is further configured to receive first indication information sent by the network device, where the first indication information carries an identifier of the designated carrier frequency band and the effective time point for indicating that the SSB carried on the designated carrier frequency band enters the discontinuous transmission state at the effective time point and is always in the discontinuous transmission state; or receive first indication information sent by the network device at the effective time point, where the first indication information carries an identifier of the designated carrier frequency band for indicating that the SSB carried on the designated carrier frequency band enters the discontinuous transmission state and is always in the discontinuous transmission state.

As a possible implementation of embodiments of the present invention, the transceiving unit 1210 is further configured to receive first indication information sent by the network device, where the first indication information carries an identifier of the designated carrier frequency band and the effective time point for indicating that the SSB carried on the designated carrier frequency band enters the discontinuous transmission state at the effective time point; or receive first indication information sent by the network device at the effective time point, where the first indication information carries an identifier of the designated carrier frequency band for indicating that the SSB carried on the designated carrier frequency band enters the discontinuous transmission state.

As a possible implementation of embodiments of the present invention, in the case where a number of pieces of the semi-static configuration information about the designated carrier frequency band is at least one, the first indication information further carries a target configuration identifier of the designated carrier frequency band for indicating that the terminal device receives information of the SSB sent by the network device based on the semi-static configuration information corresponding to the target configuration identifier after the SSB carried on the designated carrier frequency band enters the discontinuous transmission state.

As a possible implementation of embodiments of the present invention, the transceiving unit 1210 is further configured to receive a paging DCI message sent by the network device in a paging mechanism which is not provided with a PEI, where the paging DCI message carries the first indication information; or receive a PEI sent by the network device in a paging mechanism which is provided with the PEI, where the PEI carries the first indication information.

As a possible implementation of embodiments of the present invention, the transceiving unit 1210 is further configured to receive second indication information sent by the network device, where the second indication information carries an identifier of the designated carrier frequency band and the failure time point for indicating that the SSB carried on the designated carrier frequency band enters the continuous transmission state at the failure time point; or receive second indication information sent by the network device at the failure time point, where the second indication information carries an identifier of the designated carrier frequency band for indicating that the SSB carried on the designated carrier frequency band enters the discontinuous transmission state.

As a possible implementation of embodiments of the present invention, the energy-saving configuration apparatus 1200 further includes a processing unit. The processing unit is configured to determine a target carrier frequency band corresponding to a target identifier carried in the first indication information; or determine a target carrier frequency band based on the first indication information; where the target carrier frequency band is in a continuous transmission state; and reorient to the target carrier frequency band and perform measurement processing on the SSB of the defined cell carried on the target carrier frequency band in the case where the SSB carried on the current carrier frequency band of the terminal device does not satisfy a measurement requirement.

As a possible implementation of embodiments of the present invention, the designated carrier frequency band is one or more carrier frequency bands of a multi-carrier frequency band cell to which the terminal device belongs; or the designated carrier frequency band is a carrier frequency band of a designated macro cell, and/or a carrier frequency band of a hotspot cell located within a coverage area of the designated macro cell.

With the energy-saving configuration apparatus of embodiments of the present invention, the energy-saving configuration information about the designated carrier frequency band sent by the network device is received, where the energy-saving configuration information includes: the static configuration information, or the semi-static configuration information. The static configuration information is configured to indicate that the SSB carried on the designated carrier frequency band is always in the discontinuous transmission state after the effective time point. The semi-static configuration information is configured to indicate that the SSB carried on the designated carrier frequency band is in the discontinuous transmission state within the time period from the effective time point to the failure time point. With this apparatus, the static configuration information or the semi-static configuration information of the designated carrier frequency band sent by the network device is received. The static configuration information indicates that the SSB carried on the designated carrier frequency band is always in the discontinuous transmission state after the effective time point, and the semi-static configuration information indicates that the SSB carried on the designated carrier frequency band is in the discontinuous transmission state within the time period from the effective time point to the failure time point. Therefore, in the case where the number of terminal devices in the defined cell is small, the SSB carried on the designated carrier frequency band may be in the discontinuous transmission state according to the static configuration information or the semi-static configuration information about the designated carrier frequency band, reducing the resource consumption of the network device.

In order to implement the above embodiments, the present invention further provides an energy-saving configuration device including a processor and a memory, where the memory is configured to store a computer program; and the processor is configured to perform the computer program to enable the device to implement the method described in the embodiments of FIGS. 1 to 5.

In order to implement the above embodiments, the present invention further provides an energy-saving configuration device including a processor and a memory, where the memory is configured to store a computer program; and the processor is configured to perform the computer program to enable the device to implement the method described in the embodiments of FIGS. 6 to 10.

In order to implement the above embodiments, the present invention further provides an energy-saving configuration device including a processor and an interface circuit, where the interface circuit is configured to receive a code instruction and transmit it to the processor; and the processor is configured to run the code instruction to implement the method described in the embodiments of FIGS. 1 to 5.

In order to implement the above embodiments, the present invention further provides an energy-saving configuration device including a processor and an interface circuit, where the interface circuit is configured to receive a code instruction and transmit it to the processor; and the processor is configured to run the code instruction to implement the method described in the embodiments of FIGS. 6 to 10.

In order to implement the above embodiments, the present invention further provides a computer-readable storage medium having stored therein instructions that, when executed, cause the method described in the embodiments of FIGS. 1 to 5 to be implemented.

In order to implement the above embodiments, the present invention further provides a computer-readable storage medium having stored therein instructions that, when executed, cause the method described in the embodiments of FIGS. 6 to 10 to be implemented.

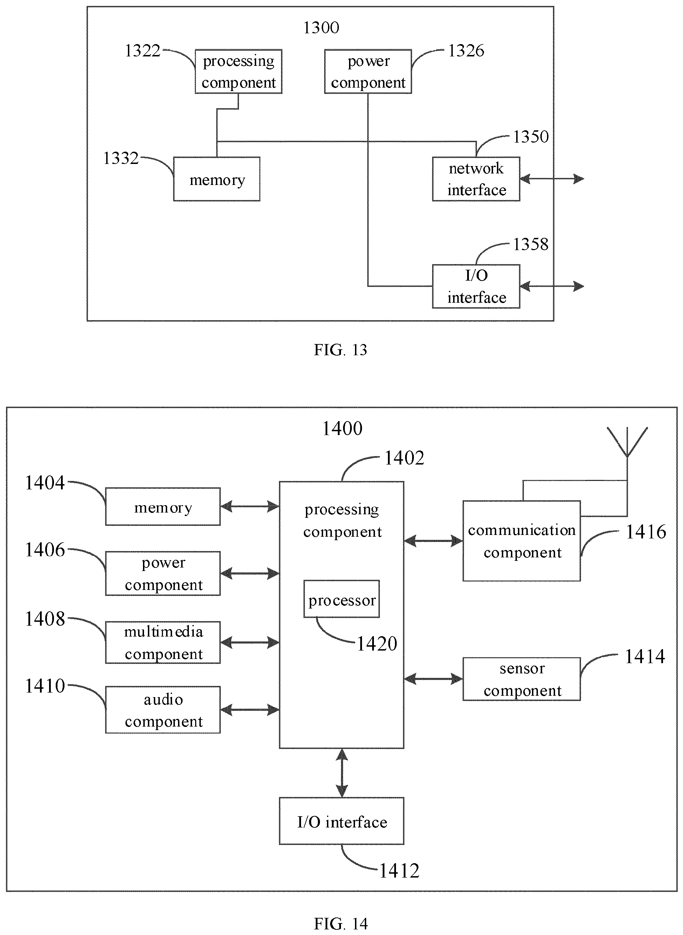

FIG. 13 is a block diagram of a network device provided by embodiments of the present invention. Referring to FIG. 13, the network device 1300 includes a processing component 1322 (further including at least one processor) and a memory resource represented by a memory 1332 for storing instructions, such as applications, executable by the processing component 1322. An application stored in the memory 1332 may include one or more modules each corresponding to a set of instructions. Further, the processing component 1322 is configured to execute instructions to perform any of the above-described method applied to the network device, such as the method described in embodiments of FIGS. 1 to 5.

The network device 1300 may further include a power component 1326 configured to perform power management of the network device 1300, a wired or wireless network interface 1350 configured to connect the network device 1300 to a network, and an input/output interface 1358. The network device 1300 may operate an operating system stored in the memory 1332, such as Windows Server TM, Mac OS XTM, UnixTM, LinuxTM, FreeBSDTM, or the like.

FIG. 14 is a block diagram of a terminal device provided by embodiments of the present invention. For example, the terminal device 1400 may be a mobile phone, a computer, a digital broadcast terminal, a messaging device, a game console, a tablet device, a medical device, an exercise device, a personal digital assistant, and so on.

Referring to FIG. 14, the terminal device 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 normally controls the overall operation (such as operations associated with displaying, telephone calls, data communications, camera operations and recording operations) of the terminal device 1400. The processing component 1402 may include one or a plurality of processors 1420 to execute instructions so as to perform all or part of the steps of the above method according to embodiments of the present invention. In addition, the processing component 1402 may include one or a plurality of units to facilitate interactions between the processing component 1402 and other components. For example, the processing component 1402 may include a multimedia unit to facilitate interactions between the multimedia component 1408 and the processing component 1402.

The memory 1404 is configured to store various types of data to support operations at the terminal device 1400. Examples of such data include instructions for any application or method operated on the terminal device 1400, contact data, phone book data, messages, images, videos and the like. The memory 1404 may be realized by any type of volatile or non-volatile storage devices, or a combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a disk or an optical disk.

The power component 1406 provides power to various components of the terminal device 1400. The power component 1406 may include a power management system, one or more power sources and other components associated with power generation, management, and distribution of the terminal device 1400.

The multimedia component 1408 includes a screen that provides an output interface between the terminal device 1400 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensor may sense not only the boundary of the touches or sliding actions, but also the duration and pressure related to the touches or sliding operations. In some embodiments, the multimedia component 1408 includes a front camera and/or a rear camera. When the terminal device 1400 is in an operation mode such as a shooting mode or a video mode, the front camera and/or the rear camera may receive external multimedia data. Each front camera and rear camera may be a fixed optical lens system or have a focal length and an optical zoom capability.

The audio component 1410 is configured to output and/or input an audio signal. For example, the audio component 1410 includes a microphone (MIC) that is configured to receive an external audio signal when the terminal device 1400 is in an operation mode such as a call mode, a recording mode, and a voice recognition mode. The received audio signal may be further stored in the memory 1404 or transmitted via the communication component 1416. In some embodiments, the audio component 1410 also includes a speaker for outputting audio signals.

The I/O interface 1412 provides an interface between the processing component 1402 and a peripheral interface unit. The peripheral interface unit may be a keyboard, a click wheel, a button and so on. These buttons may include, but are not limited to, a home button, a volume button, a start button, and a locking button.

The sensor assembly 1414 includes one or more sensors for providing the terminal device 1400 with various aspects of status assessments. For example, the sensor component 1414 may detect an ON/OFF state of the terminal device 1400 and a relative positioning of the components. For example, the components may be a display and a keypad of the terminal device 1400. The sensor component 1414 may also detect a change in position of the terminal device 1400 or a component of the terminal device 1400, the presence or absence of contact of the user with the terminal device 1400, the orientation or acceleration/deceleration of the terminal device 1400 and a temperature change of the terminal device 1400. The sensor component 1414 may include a proximity sensor configured to detect the presence of nearby objects without any physical contact. The sensor component 1414 may also include a light sensor (such as a CMOS or a CCD image sensor) for use in imaging applications. In some embodiments, the sensor component 1414 may also include an acceleration sensor, a gyro sensor, a magnetic sensor, a pressure sensor, or a temperature sensor.

The communication component 1416 is configured to facilitate wired or wireless communication between the terminal device 1400 and other devices. The terminal device 1400 may access a wireless network based on a communication standard such as 2G, 3G, 4G, 5G or a combination thereof. In an embodiment, the communication component 1416 receives broadcast signals or broadcast-associated information from an external broadcast management system via a broadcast channel. In an embodiment, the communication component 1416 also includes a near field communication (NFC) module to facilitate short range communication. For example, the NFC module may be implemented based on radio frequency identification (RFID) technology, infrared data association (IrDA) technology, ultra-wide band (UWB) technology, Bluetooth (BT) technology and other technologies.

In an embodiment, the terminal device 1400 may be implemented by one or more application specific integrated circuits (ASICs), digital signal processors (DSPs), digital signal processing devices (DSPDs), programmable logic devices (PLDs), field programmable gate arrays (FPGA), controllers, microcontrollers, microprocessors, or other electronic components, so as to perform the method shown in FIGS. 6 to 10.

In an embodiment, there is further provided a non-transitory computer readable storage medium including instructions, such as the memory 1404 including instructions executable by the processor 1420 of the terminal device 1400 to perform the method shown in FIGS. 6 to 10. For example, the non-transitory computer readable storage medium may be a ROM, a random access memory (RAM), a CD-ROM (compact disc read-only memory), a magnetic tape, a floppy disk, an optical data storage device, etc.

Other embodiments of the present invention will be apparent to those skilled in the art from consideration of the specification and practice of the present invention disclosed here. This application is intended to cover any variations, uses, or adaptations of the present invention following the general principles thereof and including such departures from the present invention as come within known or customary practice in the art. It is intended that the specification and examples be considered as explanatory only, with a true scope of the present invention being indicated by the following claims.

It will be appreciated that the present invention is not limited to the exaction construction that has been described above and illustrated in the accompanying drawings, and that various modifications and changes may be made without departing from the scope thereof. It is intended that the scope of the present invention only be limited by the appended claims.

In order to implement the above-mentioned embodiments, embodiments of the present invention further provide a communication device, where the communication device may be a network device, a terminal device, a chip, a chip system or a processor supporting the network device to implement the above-mentioned method, and a chip, a chip system or a processor supporting the terminal device to implement the above-mentioned method. The device may be configured to implement the method as described in any of the method embodiments described above, with particular reference to the description of the method embodiments described above.

The communication device may include one or more processors. The processor may be a general-purpose processor or a special-purpose processor, etc. It may be, for example, a baseband processor or a central processor. The baseband processor may be configured to process a communication protocol and communication data, and the central processor may be configured to control a communication device (such as a base station, a baseband chip, a terminal device, a terminal device chip, a DU or a CU, etc.), executing a computer program and processing data of the computer program.

Optionally, the communication device may further include one or more memories on which the computer program may be stored, and the processor executing the computer program to cause the communication device to perform the method as described in the above method embodiments. Optionally, the memory may also have the data stored therein. The communication device and the memory may be provided independently or integrated together.

Optionally, the communication device may further include a transceiver and an antenna. The transceiver may be referred to as a transceiving unit, a transceiver, or a transceiving circuit or the like for implementing a transceiving function. The transceiver may include a receiver and a transmitter, and the receiver may be referred to as a receiver or a receiving circuit or the like for implementing a receiving function; the transmitter may be referred to as a transmitter or a transmission circuit or the like for implementing a transmission function.

Optionally, the communication device may further include one or more interface circuits. The interface circuit is configured to receive and transmit the code instruction to the processor. The processor executes the code instruction to enable the communication device to perform the method described in any of the above method embodiments.

In one implementation, the processor may further include the transceiver for implementing receiving and transmitting functions. For example, the transceiver may be a transceiving circuit, or an interface, or an interface circuit. The transceiving circuit, interface, or interface circuit for implementing the receiving and transmitting functions may be separate or integrated. The transceiving circuit, interface or interface circuit may be configured to read and write code/data, or the transceiver circuit, interface or interface circuit may be configured for transmission or transfer of signal.

In one implementation, the processor may store the computer program that, when run on the processor, enables the communication device to perform the method described in any of the above method embodiments. The computer program may be solidified in the processor, in which case the processor may be implemented in hardware.

In one implementation, the communication device may include a circuit that may perform the functions of transmitting or receiving or communicating in the foregoing method embodiments. The processor and transceiver described in the present invention may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and transceiver may also be fabricated with various IC process technologies such as complementary metal oxide semiconductor (CMOS), n-metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device in the above embodiments may be the network device or the terminal device, but the scope of the communication device described in the present invention is not limited thereto. The communication device may be a stand-alone device or may be a part of a larger device. For example, the communication device may be: (1) a stand-alone integrated circuit (IC), or a chip, or a chip system or a subsystem; (2) a set of one or more ICs, optionally the set of ICs may also include a storage component for storing the data and the computer program; (3) ASIC such as modem; (4) modules that may be embedded in other devices; (5) a receiver, a terminal device, an intelligent terminal device, a cellular phone, a wireless device, a handset, a mobile unit, an onvehicle device, a network device, a cloud device, an artificial intelligence device, etc.; (6) others.

In a case where the communication device may be the chip or the chip system, the chip may include the processor and the interface. There may be at least one processor and multiple interfaces.

Optionally, the chip further includes the memory for storing necessary computer programs and data.

Those skilled in the art may further appreciate that the various illustrative logical blocks and steps described in embodiments of the present invention may be implemented in electronic hardware, computer software, or combinations of both. Whether such functionality is implemented as hardware or software depends upon particular application and design requirement of the overall system. Those skilled in the art may implement the described functionality in varying ways for each particular application, but such implementation should not be understood as exceeding the scope of protection of embodiments of the present invention.

The present invention further provides a computer program product that, when executed by the computer, causes the functions of embodiments of FIGS. 1 to 5 described above to be realized.

The present invention also provides a computer program product that, when executed by the computer, causes the functions of embodiments of FIGS. 6 to 10 described above to be realized.

In the above embodiments, the present invention may be implemented in whole or in part by the hardware, software, firmware or their combination. When implemented in the software, the present invention may be implemented in whole or in part as the computer program product. The computer program product includes one or more computer programs. The computer programs, when loaded and executed on the computer, result in whole or in part in processes or functions according to embodiments of the present invention. The computer may be a general-purpose computer, a special-purpose computer, a computer network, or other programmable devices. The computer program may be stored in a computer-readable storage medium or transmitted from one computer-readable storage medium to another, for example, the computer program may be transmitted from one website, computer, server, or data center to another website, computer, server, or data center by wire (e.g. coaxial cable, fiber optic, digital subscriber line (DSL)) or wirelessly (e.g. infrared, wireless, microwave, etc.). The computer-readable storage medium may be any available medium that may be accessed by the computer or a data storage device, such as a server, a data center, etc., that includes one or more available media. The available medium may be a magnetic medium (e.g. a floppy disk, a hard disk, a magnetic tape), an optical medium (e.g. a high-density digital video disc (DVD)), or a semiconductor medium (e.g. a solid state disk (SSD)), etc.

Those skilled in the art may appreciate that the first, second, and other numerical numbers involved in the present invention are merely for convenience of description and are not intended to limit the scope of embodiments of the present invention, which also represent a sequential order.

"At least one" in the present invention may also be described as one or more, and "the multiple" may be two, three, four, or more, and the present invention is not limited thereto. In embodiments of the present invention, regarding one technical feature, the technical features in the technical feature are distinguished by "first", "second", "third", "A", "B", "C" and "D", etc. and there is no order of precedence or order of magnitude between the technical features described by the "first", "second", "third", "A", "B", "C" and "D".

Correspondence shown in tables in the present invention may be configured or predefined. Values of information in each table are merely examples, and may be configured as other values, which is not limited in the present invention. In a case of configuring the correspondence between the information and each parameter, it is not necessarily required that all the correspondences shown in each table must be configured. For example, the correspondence shown in certain rows in the tables in the present invention may not be configured. As another example, appropriate deformation adjustments may be made based on the above table, such as splitting, merging, etc. Names of the parameters shown in titles of the above tables may also be other names understandable by the communication device, and the values or expressions of the parameters may also be other values or expressions understandable by the communication device. The above-mentioned tables may also be implemented using other data structures, for example, an array, a queue, a container, a stack, a linear table, a pointer, a linked list, a tree, a graph, a structure, a class, a heap, a hash table or a hash table.

"Predefined" in the present invention may be understood as determined, predetermined, stored, pre-stored, pre-negotiated, pre-configured, cured, or pre-fired.

Those skilled in the art may appreciate that units and algorithm steps of each example described in conjunction with embodiments disclosed herein may be implemented with the electronic hardware, or combinations of the computer software and the electronic hardware. Whether such functionality is implemented in hardware or software depends on the specific application and design constraints of the technical solution. Those skilled in the art may implement the described functionality in varying ways for each particular application, but such implementation should not be considered to be beyond the scope of the present invention.

It will be clear to those skilled in the art that, for convenience and brevity of the description, specific working procedures of the above described systems, devices and units may be referred to corresponding procedures in the preceding method embodiments and will not be described in detail here.

The above description is only for the specific embodiments of the present invention, but the scope of the present invention is not limited thereto. Any person skilled in the art may easily think of changes or substitutions within the technical scope of the present invention, which shall be covered by the protection scope of the present invention. Therefore, the protection scope of the present application shall be in line with the attached claims.

## Claims

1. An energy-saving configuration method, performed by a network device, comprising:
sending (101) energy-saving configuration information about a designated carrier frequency band to a terminal device, wherein the energy-saving configuration information comprises: static configuration information, or semi-static configuration information; the method **characterised in that**:
the static configuration information is configured to indicate that a synchronization signal block, SSB, carried on the designated carrier frequency band is always in a discontinuous transmission state after an effective time point;
the semi-static configuration information is configured to indicate that an SSB carried on the designated carrier frequency band is in a discontinuous transmission state within a time period from an effective time point to a failure time point, wherein the failure time point is the point in time at which the SSB carried on the designated carrier-frequency band enters the continuous transmission state.

2. An energy-saving configuration method, performed by a terminal device, comprising:
receiving (601) energy-saving configuration information about a designated carrier frequency band sent by a network device, wherein the energy-saving configuration information comprises: static configuration information, or semi-static configuration information; the method **characterised in that**:
the static configuration information is configured to indicate that an SSB carried on the designated carrier frequency band is always in a discontinuous transmission state after an effective time point;
the semi-static configuration information is configured to indicate that an SSB carried on the designated carrier frequency band is in a discontinuous transmission state within a time period from an effective time point to a failure time point, point, wherein the failure time point is the point in time at which the SSB carried on the designated carrier frequency band enters the continuous transmission state.

3. The method of claim 1 or 2, wherein the static configuration information comprises: a static configuration type, a cycle of discontinuous transmission, and a non-transmission time period and a transmission time period within each cycle;
the semi-static configuration information comprises: a semi-static configuration type, a cycle of discontinuous transmission, and a non-transmission time period and a transmission time period within each cycle.

4. The method of any one of claims 1 to 3, wherein
sending the energy-saving configuration information about the designated carrier frequency band to the terminal device comprises: sending a radio resource control, RRC, message to the terminal device, or
receiving the energy-saving configuration information about the designated carrier frequency band sent by the network device comprises: receiving a RRC message sent by the network device;
wherein the RRC message comprises the energy-saving configuration information about the designated carrier frequency band.

5. The method of any one of claims 1 to 4, wherein the designated carrier frequency band is one or more carrier frequency bands of a multi-carrier frequency band cell to which the terminal device belongs; or
the designated carrier frequency band is a carrier frequency band of a designated macro cell, and/or a carrier frequency band of a hotspot cell located within a coverage area of the designated macro cell.

6. The method of claim 1, wherein the energy-saving configuration information is the static configuration information, after sending the energy-saving configuration information about the designated carrier frequency band to the terminal device, the method further comprises:
sending first indication information to the terminal device, wherein the first indication information carries an identifier of the designated carrier frequency band and the effective time point for indicating that the SSB carried on the designated carrier frequency band enters the discontinuous transmission state at the effective time point and is always in the discontinuous transmission state; or
sending first indication information to the terminal device at the effective time point, wherein the first indication information carries an identifier of the designated carrier frequency band for indicating that the SSB carried on the designated carrier frequency band enters the discontinuous transmission state and is always in the discontinuous transmission state;
or
the energy-saving configuration information is the semi-static configuration information, after sending the energy-saving configuration information about the designated carrier frequency band to the terminal device, the method further comprises:
sending first indication information to the terminal device, wherein the first indication information carries an identifier of the designated carrier frequency band and the effective time point for indicating that the SSB carried on the designated carrier frequency band enters the discontinuous transmission state at the effective time point; or
sending first indication information to the terminal device at the effective time point, wherein the first indication information carries an identifier of the designated carrier frequency band for indicating that the SSB carried on the designated carrier frequency band enters the discontinuous transmission state.

7. The method of claim 6, wherein a number of pieces of the semi-static configuration information about the designated carrier frequency band is at least one, the first indication information further carries a target configuration identifier of the designated carrier frequency band for indicating that the terminal device receives information of the SSB sent by the network device based on the semi-static configuration information corresponding to the target configuration identifier after the SSB carried on the designated carrier frequency band enters the discontinuous transmission state.

8. The method of claim 6, wherein sending the first indication information to the terminal device comprises:
sending a paging downlink control information, DCI, message to the terminal device in a paging mechanism which is not provided with a paging early indication, PEI, wherein the paging DCI message carries the first indication information; or
sending a PEI to the terminal device in a paging mechanism which is provided with the PEI, wherein the PEI carries the first indication information;
optionally after sending the first indication information to the terminal device, the method further comprises:
sending second indication information to the terminal device, wherein the second indication information carries the identifier of the designated carrier frequency band and the failure time point for indicating that the SSB carried on the designated carrier frequency band enters a continuous transmission state at the failure time point; or
sending second indication information to the terminal device at the failure time point, wherein the second indication information carries the identifier of the designated carrier frequency band for indicating that the SSB carried on the designated carrier frequency band enters a continuous transmission state.

9. The method of claim 6, wherein the first indication information further carries a target identifier for instructing the terminal device to reorient to a target carrier frequency band corresponding to the target identifier based on a measurement requirement; and
wherein the SSB carried on the target carrier frequency band is in a continuous transmission state.

10. The method of claim 2, wherein the energy-saving configuration information is the static configuration information, after receiving the energy-saving configuration information about the designated carrier frequency band sent by the network device, the method further comprises:
receiving first indication information sent by the network device, wherein the first indication information carries an identifier of the designated carrier frequency band and the effective time point for indicating that the SSB carried on the designated carrier frequency band enters the discontinuous transmission state at the effective time point and is always in the discontinuous transmission state; or
sending first indication information to the terminal device at the effective time point, wherein the first indication information carries an identifier of the designated carrier frequency band for indicating that the SSB carried on the designated carrier frequency band enters the discontinuous transmission state and is always in the discontinuous transmission state;
or
the energy-saving configuration information is the semi-static configuration information, after receiving the energy-saving configuration information about the designated carrier frequency band sent by the network device, the method further comprises:
receiving first indication information sent by the network device, wherein the first indication information carries an identifier of the designated carrier frequency band and the effective time point for indicating that the SSB carried on the designated carrier frequency band enters the discontinuous transmission state at the effective time point; or
receiving first indication information sent by the network device at the effective time point, wherein the first indication information carries an identifier of the designated carrier frequency band for indicating that the SSB carried on the designated carrier frequency band enters the discontinuous transmission state.

11. The method of claim 10, wherein a number of pieces of the semi-static configuration information about the designated carrier frequency band is at least one, the first indication information further carries a target configuration identifier of the designated carrier frequency band for indicating that the terminal device receives information of the SSB sent by the network device based on the semi-static configuration information corresponding to the target configuration identifier after the SSB carried on the designated carrier frequency band enters the discontinuous transmission state.

12. The method of claim 10, wherein receiving the first indication information sent by the network device comprises:
receiving a paging DCI message sent by the network device in a paging mechanism which is not provided with a PEI, wherein the paging DCI message carries the first indication information; or
receiving a PEI sent by the network device in a paging mechanism which is provided with the PEI, wherein the PEI carries the first indication information;
optionally after receiving the first indication information sent by the network device, the method further comprises:
receiving second indication information sent by the network device, wherein the second indication information carries the identifier of the designated carrier frequency band and the failure time point for indicating that the SSB carried on the designated carrier frequency band enters a continuous transmission state at the failure time point; or
receiving second indication information sent by the network device at the failure time point, wherein the second indication information carries the identifier of the designated carrier frequency band for indicating that the SSB carried on the designated carrier frequency band enters the discontinuous transmission state.

13. The method of claim 10, wherein after receiving the first indication information sent by the network device, the method further comprises:
determining a target carrier frequency band corresponding to a target identifier carried in the first indication information; or determining a target carrier frequency band based on the first indication information; wherein the target carrier frequency band is in a continuous transmission state;
reorienting to the target carrier frequency band, and performing measurement processing on the SSB of a defined cell carried on the target carrier frequency band in a case where the SSB carried on the current carrier frequency band of the terminal device does not satisfy a measurement requirement.

14. A network device, configured to perform the method of any one of claims 1 and 6 to 9, or any one of claims 3 to 5 when depending on claim 1.

15. A terminal device, configured to perform the method of any one of claims 2 and 10 to 13, or any one of claims 3 to 5 when depending on claim 2.

## Patentansprüche

1. Ein Energiesparkonfigurationsverfahren, ausgeführt durch eine Netzwerkeinrichtung, umfassend:
Senden (101) von Energiesparkonfigurationsinformationen über ein bezeichnetes Trägerfrequenzband an eine Endgeräteeinrichtung, wobei die Energiesparkonfigurationsinformationen Folgendes umfassen: statische Konfigurationsinformationen oder semistatische Konfigurationsinformationen; wobei das Verfahren **dadurch gekennzeichnet ist, dass**:
die statischen Konfigurationsinformationen dazu konfiguriert sind, anzugeben, dass ein auf dem bezeichneten Trägerfrequenzband übertragener Synchronisationssignalblock, SSB, nach einem Wirksamkeitszeitpunkt stets in einem diskontinuierlichen Sendezustand ist;
die semistatischen Konfigurationsinformationen dazu konfiguriert sind, anzugeben, dass ein auf dem bezeichneten Trägerfrequenzband übertragener SSB innerhalb einer Zeitperiode von einem Wirksamkeitszeitpunkt bis zu einem Ausfallzeitpunkt in einem diskontinuierlichen Sendezustand ist, wobei der Ausfallzeitpunkt der Zeitpunkt ist, zu dem der auf dem bezeichneten Trägerfrequenzband übertragene SSB in den kontinuierlichen Sendezustand eintritt.

2. Ein Energiesparkonfigurationsverfahren, ausgeführt durch eine Endgeräteeinrichtung, umfassend:
Empfangen (601) von Energiesparkonfigurationsinformationen über ein bezeichnetes Trägerfrequenzband, die von einer Netzwerkeinrichtung gesendet werden, wobei die Energiesparkonfigurationsinformationen Folgendes umfassen: statische Konfigurationsinformationen oder semistatische Konfigurationsinformationen; wobei das Verfahren **dadurch gekennzeichnet ist, dass**:
die statischen Konfigurationsinformationen dazu konfiguriert sind, anzugeben, dass ein auf dem bezeichneten Trägerfrequenzband übertragener SSB nach einem Wirksamkeitszeitpunkt stets in einem diskontinuierlichen Sendezustand ist;
die semistatischen Konfigurationsinformationen dazu konfiguriert sind, anzugeben, dass ein auf dem bezeichneten Trägerfrequenzband übertragener SSB innerhalb einer Zeitperiode von einem Wirksamkeitszeitpunkt bis zu einem Ausfallzeitpunkt in einem diskontinuierlichen Sendezustand ist, wobei der Ausfallzeitpunkt der Zeitpunkt ist, zu dem der auf dem bezeichneten Trägerfrequenzband übertragene SSB in den kontinuierlichen Sendezustand eintritt.

3. Das Verfahren nach Anspruch 1 oder 2, wobei die statischen Konfigurationsinformationen Folgendes umfassen: einen statischen Konfigurationstyp, einen Zyklus diskontinuierlichen Sendens und eine Nicht-Sendezeitperiode und eine Sendezeitperiode innerhalb jedes Zyklus;
die semistatischen Konfigurationsinformationen Folgendes umfassen: einen semistatischen Konfigurationstyp, einen Zyklus diskontinuierlichen Sendens und eine Nicht-Sendezeitperiode und eine Sendezeitperiode innerhalb jedes Zyklus.

4. Das Verfahren nach einem der Ansprüche 1 bis 3, wobei
das Senden der Energiesparkonfigurationsinformationen über das bezeichnete Trägerfrequenzband an die Endgeräteeinrichtung Folgendes umfasst: Senden einer Funkressourcensteuerungsnachricht, RRC, an die Endgeräteeinrichtung, oder
das Empfangen der von der Netzwerkeinrichtung gesendeten Energiesparkonfigurationsinformationen über das bezeichnete Trägerfrequenzband Folgendes umfasst: Empfangen einer von der Netzwerkeinrichtung gesendeten RRC-Nachricht;
wobei die RRC-Nachricht die Energiesparkonfigurationsinformationen über das bezeichnete Trägerfrequenzband umfasst.

5. Das Verfahren nach einem der Ansprüche 1 bis 4, wobei das bezeichnete Trägerfrequenzband ein oder mehrere Trägerfrequenzbänder einer Mehrträgerfrequenzbandzelle ist, zu der die Endgeräteeinrichtung gehört; oder
das bezeichnete Trägerfrequenzband ein Trägerfrequenzband einer bezeichneten Makrozelle und/oder ein Trägerfrequenzband einer Hotspot-Zelle ist, die sich innerhalb eines Abdeckungsbereichs der bezeichneten Makrozelle befindet.

6. Das Verfahren nach Anspruch 1, wobei die Energiesparkonfigurationsinformationen die statischen Konfigurationsinformationen sind, wobei das Verfahren nach dem Senden der Energiesparkonfigurationsinformationen über das bezeichnete Trägerfrequenzband an die Endgeräteeinrichtung ferner umfasst:
Senden erster Angabeinformationen an die Endgeräteeinrichtung, wobei die ersten Angabeinformationen eine Kennung des bezeichneten Trägerfrequenzbands und den Wirksamkeitszeitpunkt zum Angeben tragen, dass der auf dem bezeichneten Trägerfrequenzband übertragene SSB zu dem Wirksamkeitszeitpunkt in den diskontinuierlichen Sendezustand eintritt und stets in dem diskontinuierlichen Sendezustand ist; oder
Senden erster Angabeinformationen an die Endgeräteeinrichtung zu dem Wirksamkeitszeitpunkt, wobei die ersten Angabeinformationen eine Kennung des bezeichneten Trägerfrequenzbands zum Angeben tragen, dass der auf dem bezeichneten Trägerfrequenzband übertragene SSB in den diskontinuierlichen Sendezustand eintritt und stets in dem diskontinuierlichen Sendezustand ist;
oder
die Energiesparkonfigurationsinformationen sind die semistatischen Konfigurationsinformationen, wobei das Verfahren nach dem Senden der Energiesparkonfigurationsinformationen über das bezeichnete Trägerfrequenzband an die Endgeräteeinrichtung ferner umfasst:
Senden erster Angabeinformationen an die Endgeräteeinrichtung, wobei die ersten Angabeinformationen eine Kennung des bezeichneten Trägerfrequenzbands und den Wirksamkeitszeitpunkt zum Angeben tragen, dass der auf dem bezeichneten Trägerfrequenzband übertragene SSB zu dem Wirksamkeitszeitpunkt in den diskontinuierlichen Sendezustand eintritt; oder
Senden erster Angabeinformationen an die Endgeräteeinrichtung zu dem Wirksamkeitszeitpunkt, wobei die ersten Angabeinformationen eine Kennung des bezeichneten Trägerfrequenzbands zum Angeben tragen, dass der auf dem bezeichneten Trägerfrequenzband übertragene SSB in den diskontinuierlichen Sendezustand eintritt.

7. Das Verfahren nach Anspruch 6, wobei eine Anzahl von Teilen der semistatischen Konfigurationsinformationen über das bezeichnete Trägerfrequenzband mindestens eins beträgt, wobei die ersten Angabeinformationen ferner eine Zielkonfigurationskennung des bezeichneten Trägerfrequenzbands zum Angeben tragen, dass die Endgeräteeinrichtung Informationen des von der Netzwerkeinrichtung gesendeten SSB auf Grundlage der der Zielkonfigurationskennung entsprechenden semistatischen Konfigurationsinformationen empfängt, nachdem der auf dem bezeichneten Trägerfrequenzband übertragene SSB in den diskontinuierlichen Sendezustand eintritt.

8. Das Verfahren nach Anspruch 6, wobei das Senden der ersten Angabeinformationen an die Endgeräteeinrichtung Folgendes umfasst:
Senden einer Paging-Downlink-Steuerinformationsnachricht, DCI, an die Endgeräteeinrichtung in einem Paging-Mechanismus, der nicht mit einer Paging-Frühangabe, PEI, versehen ist, wobei die Paging-DCI-Nachricht die ersten Angabeinformationen trägt; oder
Senden einer PEI an die Endgeräteeinrichtung in einem Paging-Mechanismus, der mit der PEI versehen ist, wobei die PEI die ersten Angabeinformationen trägt;
optional umfasst das Verfahren nach dem Senden der ersten Angabeinformationen an die Endgeräteeinrichtung ferner:
Senden zweiter Angabeinformationen an die Endgeräteeinrichtung, wobei die zweiten Angabeinformationen die Kennung des bezeichneten Trägerfrequenzbands und den Ausfallzeitpunkt zum Angeben tragen, dass der auf dem bezeichneten Trägerfrequenzband übertragene SSB zu dem Ausfallzeitpunkt in einen kontinuierlichen Sendezustand eintritt; oder
Senden zweiter Angabeinformationen an die Endgeräteeinrichtung zu dem Ausfallzeitpunkt, wobei die zweiten Angabeinformationen die Kennung des bezeichneten Trägerfrequenzbands zum Angeben tragen, dass der auf dem bezeichneten Trägerfrequenzband übertragene SSB in einen kontinuierlichen Sendezustand eintritt.

9. Das Verfahren nach Anspruch 6, wobei die ersten Angabeinformationen ferner eine Zielkennung zum Anweisen der Endgeräteeinrichtung tragen, sich auf Grundlage einer Messanforderung auf ein der Zielkennung entsprechendes Zielträgerfrequenzband neu auszurichten; und
wobei sich der auf dem Zielträgerfrequenzband übertragene SSB in einem kontinuierlichen Sendezustand befindet.

10. Das Verfahren nach Anspruch 2, wobei die Energiesparkonfigurationsinformationen die statischen Konfigurationsinformationen sind, wobei das Verfahren nach dem Empfangen der von der Netzwerkeinrichtung gesendeten Energiesparkonfigurationsinformationen über das bezeichnete Trägerfrequenzband ferner umfasst:
Empfangen erster von der Netzwerkeinrichtung gesendeter Angabeinformationen, wobei die ersten Angabeinformationen eine Kennung des bezeichneten Trägerfrequenzbands und den Wirksamkeitszeitpunkt zum Angeben tragen, dass der auf dem bezeichneten Trägerfrequenzband übertragene SSB zu dem Wirksamkeitszeitpunkt in den diskontinuierlichen Sendezustand eintritt und stets in dem diskontinuierlichen Sendezustand ist; oder
Senden erster Angabeinformationen an die Endgeräteeinrichtung zu dem Wirksamkeitszeitpunkt, wobei die ersten Angabeinformationen eine Kennung des bezeichneten Trägerfrequenzbands zum Angeben tragen, dass der auf dem bezeichneten Trägerfrequenzband übertragene SSB in den diskontinuierlichen Sendezustand eintritt und stets in dem diskontinuierlichen Sendezustand ist;
oder
die Energiesparkonfigurationsinformationen sind die semistatischen Konfigurationsinformationen, wobei das Verfahren nach dem Empfangen der von der Netzwerkeinrichtung gesendeten Energiesparkonfigurationsinformationen über das bezeichnete Trägerfrequenzband ferner umfasst:
Empfangen erster von der Netzwerkeinrichtung gesendeter Angabeinformationen, wobei die ersten Angabeinformationen eine Kennung des bezeichneten Trägerfrequenzbands und den Wirksamkeitszeitpunkt zum Angeben tragen, dass der auf dem bezeichneten Trägerfrequenzband übertragene SSB zu dem Wirksamkeitszeitpunkt in den diskontinuierlichen Sendezustand eintritt; oder
Empfangen erster von der Netzwerkeinrichtung zu dem Wirksamkeitszeitpunkt gesendeter Angabeinformationen, wobei die ersten Angabeinformationen eine Kennung des bezeichneten Trägerfrequenzbands zum Angeben tragen, dass der auf dem bezeichneten Trägerfrequenzband übertragene SSB in den diskontinuierlichen Sendezustand eintritt.

11. Das Verfahren nach Anspruch 10, wobei eine Anzahl von Teilen der semistatischen Konfigurationsinformationen über das bezeichnete Trägerfrequenzband mindestens eins beträgt, wobei die ersten Angabeinformationen ferner eine Zielkonfigurationskennung des bezeichneten Trägerfrequenzbands zum Angeben tragen, dass die Endgeräteeinrichtung Informationen des von der Netzwerkeinrichtung gesendeten SSB auf Grundlage der der Zielkonfigurationskennung entsprechenden semistatischen Konfigurationsinformationen empfängt, nachdem der auf dem bezeichneten Trägerfrequenzband übertragene SSB in den diskontinuierlichen Sendezustand eintritt.

12. Das Verfahren nach Anspruch 10, wobei das Empfangen der von der Netzwerkeinrichtung gesendeten ersten Angabeinformationen Folgendes umfasst:
Empfangen einer von der Netzwerkeinrichtung gesendeten Paging-DCI-Nachricht in einem Paging-Mechanismus, der nicht mit einer PEI versehen ist, wobei die Paging-DCI-Nachricht die ersten Angabeinformationen trägt; oder
Empfangen einer von der Netzwerkeinrichtung gesendeten PEI in einem Paging-Mechanismus, der mit der PEI versehen ist, wobei die PEI die ersten Angabeinformationen trägt;
optional umfasst das Verfahren nach dem Empfangen der von der Netzwerkeinrichtung gesendeten ersten Angabeinformationen ferner:
Empfangen zweiter von der Netzwerkeinrichtung gesendeter Angabeinformationen, wobei die zweiten Angabeinformationen die Kennung des bezeichneten Trägerfrequenzbands und den Ausfallzeitpunkt zum Angeben tragen, dass der auf dem bezeichneten Trägerfrequenzband übertragene SSB zu dem Ausfallzeitpunkt in einen kontinuierlichen Sendezustand eintritt; oder
Empfangen zweiter von der Netzwerkeinrichtung zu dem Ausfallzeitpunkt gesendeter Angabeinformationen, wobei die zweiten Angabeinformationen die Kennung des bezeichneten Trägerfrequenzbands zum Angeben tragen, dass der auf dem bezeichneten Trägerfrequenzband übertragene SSB in den diskontinuierlichen Sendezustand eintritt.

13. Das Verfahren nach Anspruch 10, wobei das Verfahren nach dem Empfangen der von der Netzwerkeinrichtung gesendeten ersten Angabeinformationen ferner umfasst:
Bestimmen eines Zielträgerfrequenzbands, das einer in den ersten Angabeinformationen getragenen Zielkennung entspricht; oder Bestimmen eines Zielträgerfrequenzbands auf Grundlage der ersten Angabeinformationen; wobei sich das Zielträgerfrequenzband in einem kontinuierlichen Sendezustand befindet;
Neuausrichten auf das Zielträgerfrequenzband und Durchführen einer Messverarbeitung an dem SSB einer definierten Zelle, der auf dem Zielträgerfrequenzband übertragen wird, in einem Fall, in dem der auf dem aktuellen Trägerfrequenzband der Endgeräteeinrichtung übertragene SSB eine Messanforderung nicht erfüllt.

14. Eine Netzwerkeinrichtung, konfiguriert zum Durchführen des Verfahrens nach einem der Ansprüche 1 und 6 bis 9 oder nach einem der Ansprüche 3 bis 5, wenn diese von Anspruch 1 abhängig sind.

15. Eine Endgeräteeinrichtung, konfiguriert zum Durchführen des Verfahrens nach einem der Ansprüche 2 und 10 bis 13 oder nach einem der Ansprüche 3 bis 5, wenn diese von Anspruch 2 abhängig sind.

## Revendications

1. Un procédé de configuration d'économie d'énergie, mis en œuvre par un dispositif de réseau, comprenant :
l'envoi (101) d'informations de configuration d'économie d'énergie concernant une bande de fréquences porteuses désignée à un dispositif terminal, dans lequel les informations de configuration d'économie d'énergie comprennent : des informations de configuration statique, ou des informations de configuration semi-statique ; le procédé étant **caractérisé en ce que** :
les informations de configuration statique sont configurées pour indiquer qu'un bloc de signal de synchronisation, SSB, transporté sur la bande de fréquences porteuses désignée se trouve toujours dans un état de transmission discontinue après un instant effectif ;
les informations de configuration semi-statique sont configurées pour indiquer qu'un SSB transporté sur la bande de fréquences porteuses désignée se trouve dans un état de transmission discontinue pendant une période allant d'un instant effectif à un instant de défaillance, dans lequel l'instant de défaillance est l'instant auquel le SSB transporté sur la bande de fréquences porteuses désignée passe à l'état de transmission continue.

2. Un procédé de configuration d'économie d'énergie, mis en œuvre par un dispositif terminal, comprenant :
la réception (601) d'informations de configuration d'économie d'énergie concernant une bande de fréquences porteuses désignée envoyées par un dispositif de réseau, dans lequel les informations de configuration d'économie d'énergie comprennent : des informations de configuration statique, ou des informations de configuration semi-statique ; le procédé étant **caractérisé en ce que** :
les informations de configuration statique sont configurées pour indiquer qu'un SSB transporté sur la bande de fréquences porteuses désignée se trouve toujours dans un état de transmission discontinue après un instant effectif ;
les informations de configuration semi-statique sont configurées pour indiquer qu'un SSB transporté sur la bande de fréquences porteuses désignée se trouve dans un état de transmission discontinue pendant une période allant d'un instant effectif à un instant de défaillance, dans lequel l'instant de défaillance est l'instant auquel le SSB transporté sur la bande de fréquences porteuses désignée passe à l'état de transmission continue.

3. Le procédé selon la revendication 1 ou 2, dans lequel les informations de configuration statique comprennent : un type de configuration statique, un cycle de transmission discontinue, et une période de non-transmission et une période de transmission au sein de chaque cycle ;
les informations de configuration semi-statique comprennent : un type de configuration semi-statique, un cycle de transmission discontinue, et une période de non-transmission et une période de transmission au sein de chaque cycle.

4. Le procédé selon l'une quelconque des revendications 1 à 3, dans lequel
l'envoi des informations de configuration d'économie d'énergie concernant la bande de fréquences porteuses désignée au dispositif terminal comprend : l'envoi d'un message de commande de ressources radio, RRC, au dispositif terminal, ou
la réception des informations de configuration d'économie d'énergie concernant la bande de fréquences porteuses désignée envoyées par le dispositif de réseau comprend : la réception d'un message RRC envoyé par le dispositif de réseau ;
dans lequel le message RRC comprend les informations de configuration d'économie d'énergie concernant la bande de fréquences porteuses désignée.

5. Le procédé selon l'une quelconque des revendications 1 à 4, dans lequel la bande de fréquences porteuses désignée est une ou plusieurs bandes de fréquences porteuses d'une cellule à bandes de fréquences porteuses multiples à laquelle appartient le dispositif terminal ; ou
la bande de fréquences porteuses désignée est une bande de fréquences porteuses d'une macrocellule désignée, et/ou une bande de fréquences porteuses d'une cellule de point chaud située dans une zone de couverture de la macrocellule désignée.

6. Le procédé selon la revendication 1, dans lequel les informations de configuration d'économie d'énergie sont les informations de configuration statique, après l'envoi des informations de configuration d'économie d'énergie concernant la bande de fréquences porteuses désignée au dispositif terminal, le procédé comprend en outre :
l'envoi d'une première information d'indication au dispositif terminal, dans lequel la première information d'indication comporte un identifiant de la bande de fréquences porteuses désignée et l'instant effectif pour indiquer que le SSB transporté sur la bande de fréquences porteuses désignée passe à l'état de transmission discontinue à l'instant effectif et se trouve toujours dans l'état de transmission discontinue ; ou
l'envoi d'une première information d'indication au dispositif terminal à l'instant effectif, dans lequel la première information d'indication comporte un identifiant de la bande de fréquences porteuses désignée pour indiquer que le SSB transporté sur la bande de fréquences porteuses désignée passe à l'état de transmission discontinue et se trouve toujours dans l'état de transmission discontinue ;
ou
les informations de configuration d'économie d'énergie sont les informations de configuration semi-statique, après l'envoi des informations de configuration d'économie d'énergie concernant la bande de fréquences porteuses désignée au dispositif terminal, le procédé comprend en outre :
l'envoi d'une première information d'indication au dispositif terminal, dans lequel la première information d'indication comporte un identifiant de la bande de fréquences porteuses désignée et l'instant effectif pour indiquer que le SSB transporté sur la bande de fréquences porteuses désignée passe à l'état de transmission discontinue à l'instant effectif ; ou
l'envoi d'une première information d'indication au dispositif terminal à l'instant effectif, dans lequel la première information d'indication comporte un identifiant de la bande de fréquences porteuses désignée pour indiquer que le SSB transporté sur la bande de fréquences porteuses désignée passe à l'état de transmission discontinue.

7. Le procédé selon la revendication 6, dans lequel un nombre d'éléments d'informations de configuration semi-statique concernant la bande de fréquences porteuses désignée est au moins égal à un, la première information d'indication comporte en outre un identifiant de configuration cible de la bande de fréquences porteuses désignée pour indiquer que le dispositif terminal reçoit des informations du SSB envoyées par le dispositif de réseau sur la base des informations de configuration semi-statique correspondant à l'identifiant de configuration cible après que le SSB transporté sur la bande de fréquences porteuses désignée est passé à l'état de transmission discontinue.

8. Le procédé selon la revendication 6, dans lequel l'envoi de la première information d'indication au dispositif terminal comprend :
l'envoi d'un message d'informations de commande de liaison descendante de radiomessagerie, DCI, au dispositif terminal dans un mécanisme de radiomessagerie qui n'est pas pourvu d'une indication précoce de radiomessagerie, PEI, dans lequel le message DCI de radiomessagerie comporte la première information d'indication ; ou
l'envoi d'une PEI au dispositif terminal dans un mécanisme de radiomessagerie qui est pourvu de la PEI, dans lequel la PEI comporte la première information d'indication ;
facultativement, après l'envoi de la première information d'indication au dispositif terminal, le procédé comprend en outre :
l'envoi d'une deuxième information d'indication au dispositif terminal, dans lequel la deuxième information d'indication comporte l'identifiant de la bande de fréquences porteuses désignée et l'instant de défaillance pour indiquer que le SSB transporté sur la bande de fréquences porteuses désignée passe à un état de transmission continue à l'instant de défaillance ; ou
l'envoi d'une deuxième information d'indication au dispositif terminal à l'instant de défaillance, dans lequel la deuxième information d'indication comporte l'identifiant de la bande de fréquences porteuses désignée pour indiquer que le SSB transporté sur la bande de fréquences porteuses désignée passe à un état de transmission continue.

9. Le procédé selon la revendication 6, dans lequel la première information d'indication comporte en outre un identifiant cible pour donner instruction au dispositif terminal de se réorienter vers une bande de fréquences porteuses cible correspondant à l'identifiant cible sur la base d'une exigence de mesure ; et
dans lequel le SSB transporté sur la bande de fréquences porteuses cible se trouve dans un état de transmission continue.

10. Le procédé selon la revendication 2, dans lequel les informations de configuration d'économie d'énergie sont les informations de configuration statique, après la réception des informations de configuration d'économie d'énergie concernant la bande de fréquences porteuses désignée envoyées par le dispositif de réseau, le procédé comprend en outre :
la réception d'une première information d'indication envoyée par le dispositif de réseau, dans lequel la première information d'indication comporte un identifiant de la bande de fréquences porteuses désignée et l'instant effectif pour indiquer que le SSB transporté sur la bande de fréquences porteuses désignée passe à l'état de transmission discontinue à l'instant effectif et se trouve toujours dans l'état de transmission discontinue ; ou
l'envoi d'une première information d'indication au dispositif terminal à l'instant effectif, dans lequel la première information d'indication comporte un identifiant de la bande de fréquences porteuses désignée pour indiquer que le SSB transporté sur la bande de fréquences porteuses désignée passe à l'état de transmission discontinue et se trouve toujours dans l'état de transmission discontinue ;
ou
les informations de configuration d'économie d'énergie sont les informations de configuration semi-statique, après la réception des informations de configuration d'économie d'énergie concernant la bande de fréquences porteuses désignée envoyées par le dispositif de réseau, le procédé comprend en outre :
la réception d'une première information d'indication envoyée par le dispositif de réseau, dans lequel la première information d'indication comporte un identifiant de la bande de fréquences porteuses désignée et l'instant effectif pour indiquer que le SSB transporté sur la bande de fréquences porteuses désignée passe à l'état de transmission discontinue à l'instant effectif ; ou
la réception d'une première information d'indication envoyée par le dispositif de réseau à l'instant effectif, dans lequel la première information d'indication comporte un identifiant de la bande de fréquences porteuses désignée pour indiquer que le SSB transporté sur la bande de fréquences porteuses désignée passe à l'état de transmission discontinue.

11. Le procédé selon la revendication 10, dans lequel un nombre d'éléments d'informations de configuration semi-statique concernant la bande de fréquences porteuses désignée est au moins égal à un, la première information d'indication comporte en outre un identifiant de configuration cible de la bande de fréquences porteuses désignée pour indiquer que le dispositif terminal reçoit des informations du SSB envoyées par le dispositif de réseau sur la base des informations de configuration semi-statique correspondant à l'identifiant de configuration cible après que le SSB transporté sur la bande de fréquences porteuses désignée est passé à l'état de transmission discontinue.

12. Le procédé selon la revendication 10, dans lequel la réception de la première information d'indication envoyée par le dispositif de réseau comprend :
la réception d'un message DCI de radiomessagerie envoyé par le dispositif de réseau dans un mécanisme de radiomessagerie qui n'est pas pourvu d'une PEI, dans lequel le message DCI de radiomessagerie comporte la première information d'indication ; ou
la réception d'une PEI envoyée par le dispositif de réseau dans un mécanisme de radiomessagerie qui est pourvu de la PEI, dans lequel la PEI comporte la première information d'indication ;
facultativement, après la réception de la première information d'indication envoyée par le dispositif de réseau, le procédé comprend en outre :
la réception d'une deuxième information d'indication envoyée par le dispositif de réseau, dans lequel la deuxième information d'indication comporte l'identifiant de la bande de fréquences porteuses désignée et l'instant de défaillance pour indiquer que le SSB transporté sur la bande de fréquences porteuses désignée passe à un état de transmission continue à l'instant de défaillance ; ou
la réception d'une deuxième information d'indication envoyée par le dispositif de réseau à l'instant de défaillance, dans lequel la deuxième information d'indication comporte l'identifiant de la bande de fréquences porteuses désignée pour indiquer que le SSB transporté sur la bande de fréquences porteuses désignée passe à l'état de transmission discontinue.

13. Le procédé selon la revendication 10, dans lequel, après la réception de la première information d'indication envoyée par le dispositif de réseau, le procédé comprend en outre :
la détermination d'une bande de fréquences porteuses cible correspondant à un identifiant cible porté par la première information d'indication ; ou la détermination d'une bande de fréquences porteuses cible sur la base de la première information d'indication ; dans lequel la bande de fréquences porteuses cible se trouve dans un état de transmission continue ;
la réorientation vers la bande de fréquences porteuses cible, et la réalisation d'un traitement de mesure sur le SSB d'une cellule définie transporté sur la bande de fréquences porteuses cible dans un cas où le SSB transporté sur la bande de fréquences porteuses actuelle du dispositif terminal ne satisfait pas à une exigence de mesure.

14. Un dispositif de réseau, configuré pour mettre en œuvre le procédé selon l'une quelconque des revendications 1 et 6 à 9, ou selon l'une quelconque des revendications 3 à 5 lorsqu'elle dépend de la revendication 1.

15. Un dispositif terminal, configuré pour mettre en œuvre le procédé selon l'une quelconque des revendications 2 et 10 à 13, ou selon l'une quelconque des revendications 3 à 5 lorsqu'elle dépend de la revendication 2.
